(19) Europäisches Patentamt
European Patent Office
Office européen des brevets

(11) **EP 3 432 461 A1**

(12) **EUROPEAN PATENT APPLICATION**
published in accordance with Art. 153(4) EPC

(43) Date of publication:
**23.01.2019 Bulletin 2019/04**

(21) Application number: **17766125.3**

(22) Date of filing: **06.02.2017**

(51) Int Cl.:
***H02M 7/49*** *(2007.01)*

(86) International application number:
**PCT/JP2017/004263**

(87) International publication number:
**WO 2017/159117 (21.09.2017 Gazette 2017/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **15.03.2016 JP 2016050527**

(71) Applicants:
- **Kabushiki Kaisha Toshiba**
  **Minato-ku**
  **Tokyo 105-8001 (JP)**
- **Toshiba Energy Systems & Solutions Corporation**
  **Saiwai-ku**
  **Kawasaki-shi**
  **Kanagawa 2120013 (JP)**

(72) Inventors:
- **HASEGAWA, Ryuta**
  **Tokyo 105-8001 (JP)**
- **SUZUKI, Daichi**
  **Tokyo 105-8001 (JP)**
- **FUJITA, Takashi**
  **Tokyo 105-8001 (JP)**
- **ISHIZUKI, Teruyuki**
  **Tokyo 105-8001 (JP)**
- **IIO, Naotaka**
  **Tokyo 105-8001 (JP)**

(74) Representative: **AWA Sweden AB**
**Junkersgatan 1**
**582 35 Linköping (SE)**

# (54) POWER CONVERSION DEVICE

(57) A power conversion device that can eliminate an input DC capacitor, and can decrease a withstand voltage of switches connected in series without any trouble is provided. Each phase arm 2 formed by connecting chopper cells 3 in series, and divided into upper and lower arms 21, 22 is connected to a DC power supply via first and fourth switches at both ends of the phase arm. Second and third switches 42 and 43 in parallel with the phase arm 2 are connected in series between the first and fourth switches 41, 44. An output terminal 23 is provided between the upper and lower arms 21, 22, a neutral-point 5 is provided between the second and third switches 42, 43, and the neutral-points 5 in respective phases are connected with each other. The neutral-point 5 is connected via a reactor 7.

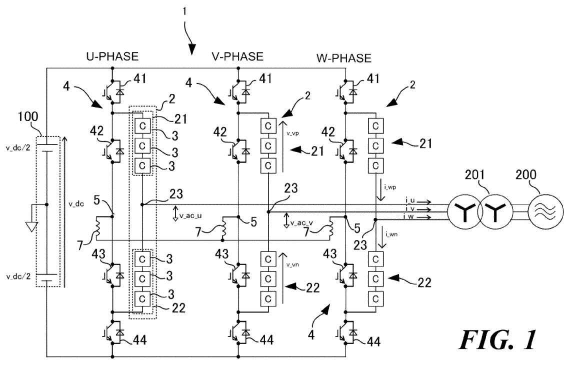


*FIG. 1*

EP 3 432 461 A1

Printed by Jouve, 75001 PARIS (FR)

**Description**

FIELD

Embodiments of the present disclosure relates to a power conversion device which is installed between a DC power supply and an AC power system, and which mutually converts AC and DC.

BACKGROUND

In recent years, the popularization of renewable energies, such as wind power generation, solar power generation, and solar thermal power generation, are advancing. To supply larger power by renewable energy, offshore wind power generation, and solar power generation and solar thermal power generation in desert regions are starting to be considered. In the case of the offshore wind power generation, it is required to high-power-transmit the generated power from offshore to cities that are power consumption site via a submarine cable, or to transmit large amount of power in high efficiency from the desert regions in Africa and in inner China to large cities in Europe or in coastal regions for a long distance. As for such a requirement, a DC power transmission is more efficient than conventional three-phase AC power transmission, and since an installation of the system while suppressing costs is enabled, a construction of the DC power transmission network is starting to be considered.

In the DC power transmission, power conversion devices, such as a converter that converts generated AC power into DC power for DC power transmission, and an inverter that converts the transmitted DC power into AC power for the cities, are necessary. Currently, a power conversion device which is capable of outputting a voltage waveform close to a sine wave to prevent harmonic wave by the switching of the converter and the inverter from flowing out to the AC system, and which can reduce output filters is in practice. This power conversion device is called a MMC (Modular Multilevel Converter).

The MMC is installed between a DC power supply and an AC power system. The MMC includes phase arms in three phases when conversion to a three-phase AC is executed. The phase arms in the three phases include chopper cells connected in series. The phase arms in the three phases are connected in parallel, and are each always connected to the DC power supply. Each phase arm is divided into an upper arm and a lower arm. That is, in the MMC, chopper cells group connected in series is divided into two groups, respective chopper cells groups are called an upper arm and a lower arm, and an output terminal to the AC power system is provided between the upper arm and the lower arm. Reactors are respectively installed between the upper arm and the output terminal, and between the lower arm and the output terminal, suppressing a current increase due to a short-circuit between the upper arm and the lower arm.

In MMC, power pulsation equivalent to the output AC frequency occurs in the capacitor of the chopper cell. To suppress the change in capacitor voltage to be equal to or smaller than a certain value, it is required to increase the capacity of the capacitor. In the case of the DC power transmission in which the DC voltage reaches several ten kV to several hundred kV, the number of chopper cells is large, and the capacitor volume increases in proportional to such a number.

Hence, in recent years, a neutral-point clamp type modular multilevel converter (NPC-MMC) that is a combination of a valve having multiple self excitation switches such as IGBTs, etc. connected in series and the chopper cells has been proposed. The NPC-MMC includes a first switch and a fourth switch at both ends of the respective phase arms in the three phases and the phase arms in the three phases are each connected to the DC power supply via the first switch and fourth switch. Moreover, the NPC-MMC also includes a second switch and a third switch connected in series between the first switch and the fourth switch, and these second switch and third switch are connected in parallel with the phase arm.

The NPC-MMC connects one phase in series to the other two phases, connects the other two phases in parallel, and connects the arms in the three phases having such a connection relation are to the DC power supply by on-off operation of each switch. Hence, the NPC-MMC can have half the number of chopper cells in respective phases, reduce the installation space for the device, reduce the swithing loss, and improve the conversion efficiency.

The NPC-MMC has the neutral-point between the second switch and the third switch. In general, the neutral point is created between the second switch and the third switch by connecting a pair of input DC capacitors connected in series to the phase arm in parallel, and connecting between of the second switch and the third switch, and the input DC capacitors. However, the presence of the input DC capacitors decreases the advantage of the NPC-MMC which is downsized. Hence, in recent years, NPC-MMC which has the input DC capacitor eliminated by connecting the neutral-points with each other.

CITATION LIST

PATENT LITERATURES

Patent Literature 1: US 2014/0092660 A
Patent Literature 2: US 2014/0092661 A

Non-Patent Literature 1: Year 2014, Institute of Electrical Engineers of Japan, Industry Applications Society Conference Program, 1-155: neutral-point clamp type modular multilevel converter

SUMMARY

In the NPC-MMC, to connect the positive side of the DC power supply and the negative side thereof by the two phases connected in series, it is sufficient for the first switch to fourth switch connected in series in each phase to have a withstand voltage that is equal to or greater than the half of the DC input voltage. However, as for the NPC-MMC with the input DC capacitor eliminated, there is a case in which the DC input voltage from the DC power supply is applied to the switch which is present within a current path including the reactor before the connections of the three phases are changed, and which transitions from the ON to the OFF by the change in the connection of the three phases. Hence, the switch is required to have the withstand voltage that is equal to or greater than the DC input voltage.

For example, as illustrated in FIG. 20(a), a second switch 42 and a fourth switch 44 in the U-phase and a first switch 41 and a third switch 43 in the V-phase are ON, while the other switches are OFF. In this state, a current path for a circulating AC current Ic that passes through a reactor 7 between an upper arm 21 in the U-phase and an output terminal 23 in the U-phase, the upper arm 21 in the U-phase, a second switch 42 in the U-phase, a neutral-point 5 in the U-phase, the neutral-point 5 in the V-phase, a third switch 43 in the V-phase, the lower arm 22 in the V-phase, and the reactor 7 between the lower arm 22 in the V-phase and the output terminal 23 in the V-phase, is formed.

As illustrated in FIG. 20(b), when the second switch 42 in the U-phase is turned OFF in advance to change the connections of the three phases, , to maintain the circulating current Ic that flows the reactor 7 between the upper arm 21 in the U-phase and the output terminal 23 in the U-phase, and the reactor 7 between the lower arm 22 in the V-phase and the output terminal 23 in the V-phase, a current path for the circulating AC current Ic that passes through the reactor 7 between the upper arm 21 in the U-phase and the output terminal 23 in the U-phase, the upper arm 21 in the U-phase, the first switch 41 in the U-phase, the DC power supply 100, the fourth switch 44 in the U-phase, the third switch 43 in the U-phase, the neutral-point 5 in the U-phase, the neutral-point 5 in the V-phase, the third switch 43 in the V-phase, the lower arm 22 in the V-phase, and the reactor 7 between the lower arm 22 in the V-phase and the output terminal 23 in the V-phase .

Accordingly, as illustrated in FIG. 20(b), the DC input voltage from the DC power supply 100 is applied to the second switch 42 in the U-phase which has been turned OFF. Hence, the first to fourth switches 41 to 44 is required to have the withstand voltage that is equal to or greater than the DC input voltage of the power supply 100. In order to increase the withstand voltage, it is necessary to increase the number of switching elements that form the first to fourth switches 41 to 44. The increase in the number of switching elements results in an increase in costs of the NPC-MMC and an increase in the size thereof.

Hence, an objective of an embodiment of the present disclosure is to provide a power conversion device that is an NPC-MMC which can eliminate the input DC capacitor, and which can decrease a withstand voltage of switches connected in series without any trouble.

In order to achieve the above objective, a power conversion device according to an embodiment is provided between a DC power supply and an AC power system, and mutually converts AC and DC, and the power conversion device includes:

respective phase arms in a plurality of phases, each of the phase arms including a plurality of chopper cells connected in series;
an upper arm and a lower arm formed by dividing the chopper cells in the phase arm into two;
an output terminal provided between the upper arm and the lower arm, and connected to the AC power system;
a first switch and a fourth switch provided at both ends of the phase arm, and provided between the phase arm and the DC power supply;
a second switch and a third switch connected in series between the first switch and the fourth switch, and connected in parallel with the phase arm;
respective neutral-points in the plurality of phases each provided between the second switch and the third switch, and connected with each other; and
a reactor provided between the respective neutral-points in the plurality of phases.

## BRIEF DESCRIPTION OF DRAWINGS

FIG. 1 is a structural diagram of a power conversion device according to an embodiment;
FIG. 2 is a structural diagram of a chopper cell of the power conversion device;
FIGS. 3(a) and 3(b) are each a schematic diagram illustrating an example connection relation in each phase, and a flowing current in the power conversion device;
FIG. 4 is a table illustrating the connection relation in each phase for each power phase;
FIG. 5 is a control block diagram of the power conversion device;
FIG. 6 is a control block diagram of a voltage control that causes a voltage difference normal-phase component between an upper arm and a lower arm to be zero;
FIG. 7 is a control block diagram of the voltage control that causes a voltage difference zero-phase component between the upper arm and the lower arm to be zero;
FIG. 8 is a control block diagram relating to a DC component of a P-N circulating current;
FIG. 9 is a control block diagram illustrating a calculating procedure of the P-N circulating current;
FIG. 10 is a control block diagram of an estimation of a circulating current in each phase to calculate the P-N circulating current;
FIGS. 11(a) to 10 (c) are each a control block diagram illustrating a first example of an inter-phase balance control;
FIGS. 12 (a) to 11(c) are each a control block diagram illustrating another example of the inter-phase balance control;
FIG. 13 is a control block diagram for making average values of the capacitor voltage of all the chopper cells constant;
FIG. 14 is a control block diagram for calculating a voltage command value for the upper and lower arms in each phase;
FIG. 15 is a control block diagram for calculating the voltage command value for each chopper cell;
FIG. 16 is a graph illustrating a calculation method of a command value of the output voltage of the chopper cell;
FIG. 17 is a transition table illustrating timings to turn ON and OFF a switch in each valve;
FIGS. 18(a) and 18(b) are each a schematic diagram illustrating a change in circulating AC current in a switching transition;
FIG. 19 is a graph for explaining a voltage output method of the chopper cell; and
FIGS. 20(a) and 20(b) are each a schematic diagram illustrating an example circulating current in a conventional power conversion device that has a reactor installed in a phase arm.

## DETAILED DESCRIPTION

(Structure)

A power conversion device according to this embodiment will be described in detail with reference to the figures. FIG. 1 is a structural diagram of the power conversion device according to this embodiment. FIG. 2 is a structural diagram of a chopper cell of the power conversion device. The power conversion device 1 is a neutral-point clamp type modular multilevel converter (NPC-MMC), and is installed in a high-voltage DC power transmission system. This power conversion device 1 is installed between a DC power supply 100 and an AC power system 200. This power conversion device 1 converts an input DC voltage v_dc of the DC power supply 100 into AC voltages v_ac in three phases, and outputs AC power to the AC power system 200 via a three-phase transformer 201.
This power conversion device 1 includes phase arms 2 that generate respective AC voltages v_ac in the U-phase, the V-phase, and the W-phase. Each phase arm 2 has both ends connected to a first switch 41 and a fourth switch 44, and is connected to the DC power supply 100 via the first switch 41 and the fourth switch 44. Each phase arm 2 is formed by connecting a plurality of chopper cells 3 in series.
As illustrated in FIG. 2, the chopper cell 3 includes a leg that has a switch 31 and a switch 32 connected in series, and a DC capacitor 33 connected in parallel. The switches 31 and 32 are reverse conducting switches, and each of the switches 31 and 32 includes a switching element and a feedback diode 34 connected in reverse parallel. An example switching element is an IGBT, a MOSFET, etc., that flows a current in one direction when turned ON, and has a self-extinguishing capability.
In each phase arm 2, the chopper cell 3 is divided into an upper arm 21 and a lower arm 22. The upper arm 21 is a group of the chopper cells 3 connected to the positive side with respect to the DC power supply 100. The lower arm 22 is a group of the chopper cells 3 connected to the negative side with respect to the DC power supply 100. The phase arm 2 includes an output terminal 23 between the upper arm 21 and the lower arm 22, and outputs AC power v_ac to the AC power system 200 from the output terminal 23 via the three-phase transformer 201.

Each phase arm 2 converts a DC voltage v_dc into a stepwise AC voltage v_ac with the chopper cell 3 being a unit converter. The number of the chopper cells 3 in each phase arm 2 is determined in accordance with the input DC voltage v_dc and a capacitor voltage v_ch of the chopper cell 3, and is substantially (v_dc/2)/v_ch. In this embodiment, the number of the chopper cells 3 is designed as three.

Moreover, the power conversion device 1 further includes, in each phase, a valve 4 that has the first switch 41 and the fourth switch 44 as a configuration component. The valve 4 includes, in addition to the first switch 41 and the fourth switch 44, a second switch 42 and a third switch 43. These first to fourth switches 41 to 44 are connected in series . The second switch 42 and the third switch 43 are connected in series between the first switch 41 and the fourth switch 44, and are connected in parallel with the phase arm 2. The valve 4 changes the connection relation of each phase arm 2 for each voltage phase angle that is 60 degrees by turning ON and OFF the first to fourth switches 41 to 44.

The first to fourth switches 41, 42, 43, and 44 are each a reverse conducting switch, and include a switching element and a feedback diode 34 connected in reverse parallel. An example switching element is an IGBT, a MOSFET, etc., that flows a current in one direction when turned ON, and has a self-extinguishing capability.

The first to fourth switches 41, 42, 43, and 44 has a withstand voltage determined by the input DC voltage v_dc of the DC power supply 100. The applied element is selected by considering a superimpose of a surge voltage at the time of switching operation on the voltage that is v_dc/2 with respect to the input DC voltage v_dc. When the input DC voltage v_dc is equal to or larger than several ten kV, it is difficult to accomplish the withstand voltage by a single switching element, and it is required to connect a plurality of switching elements in series. Although one switch has one switching element in this embodiment, one switch may include a plurality of switching elements connected in series.

Regarding the directions of the first switch 41 and the fourth switch 44, the first switch 41 has a collector connected to the positive side of the DC power supply 100, and has an emitter connected to a collector of the upper arm 21. The fourth switch 44 has an emitter connected to the negative side of the DC power supply 100, and has a collector connected to an emitter of the lower arm 22. Regarding the directions of the second switch 42 and the third switch 43, a collector of the second switch 42 is connected to the emitter of the first switch 41 that is connected to the upper arm 21, and an emitter of the third switch 43 is connected to the collector of the fourth switch 44 that is connected to the lower arm 22.

A neutral-point 5 is provided between the second switch 42 and the third switch 43 in the U-phase, a neutral-point 5 is provided between the second switch 42 and the third switch 43 in the V-phase, a neutral-point 5 is provided between the second switch 42 and the third switch 43 in the W-phase. Each neutral-point 5 is connected to respective reactor 7, and is connected with each other via respective reactors 7.

(Control)

As illustrated in FIGS. 3 (a) and 3(b), in this power conversion device 1, for each voltage phase that is 60 degrees, one phase is connected in series to other two phases, the other two phases are connected in parallel, or the parallel two phases and the one phase are interchanged to the positive side or the negative side, by various combinations.

For example, as illustrated in FIG. 3(a) and FIG. 4, when the voltage phase in the U-phase is $\pi/3$ to $2\pi/3$, the phase arms 2 in the V-phase and the W-phase are connected in parallel, the phase arms 2 connected in parallel are connected in series to the phase arm 2 in the U-phase, the phase arms 2 in the V-phase and the W-phase are connected to the negative side of the DC power supply 100, and the phase arm 2 in the U-phase is connected to the positive side of the DC power supply 100.

The circuit with this connection configuration is achieved by the following ON and OFF switching in the valve 4. That is, the first switch 41 and the third switch 43 in the U-phase are turned ON, the second switch 42 and the fourth switch 44 in the V-phase are turned ON, and the second switch 42 and the fourth switch 44 in the W-phase are turned ON.

Moreover, as illustrated in FIG. 3(b) and FIG. 4, when, for example, the voltage phase in the U-phase is $4\pi/3$ to $5\pi/3$, the phase arms 2 in the V-phase and in the W-phase are connected in parallel with the DC power supply 100, the phase arms 2 connected in parallel are connected in series to the phase arm 2 in the U-phase, the phase arms 2 in the V-phase and in the W-phase are connected to the positive side of the DC power supply 100, and the phase arm 2 in the U-phase is connected to the negative side of the DC power supply 100.

The circuit with this connection configuration is achieved by the following ON and OFF switching in the valve 4. That is, in the valve 4, the first switch 41 and the third switch 43 in the V-phase are turned ON, the first switch 41 and the third switch 43 in the W-phase are turned ON, and the second switch 42 and the fourth switch 44 in the U-phase are turned ON.

When the power conversion device 1 is operated, and for example, when an output AC voltage v_ac_u in the U-phase is positive and an output AC voltage v_ac_v in the V-phase is negative, a voltage that is a total of a capacitor voltage v_up+v_un of the phase arm 2 in the U-phase and a capacitor voltage v_vp+v_vn of the phase arm 2 in the V-phase is short-circuited with the input DC voltage v_dc via the first switch 41 and the third switch 43 in the U-phase, and the second switch 42 and the fourth switch 44 in the V-phase. The reactor 7 suppresses a current increase at the time of this short-circuit.

In this power conversion device 1, as illustrated in FIGS. 3(a) and 3(b), a P-N circulating current flows between the DC power supply 100 and the power conversion device 1. The P-N circulating current is a current that flows in a circuit formed in the power conversion device 1 from the positive side of the DC power supply 100 to the negative side thereof. Moreover, an inter-phase circulating current flows between the phase arms 2 in the two phases connected in parallel. The inter-phase circulating DC current is a current that circulates in the phase arms 2 in the two phases connected in parallel.

(Voltage Control)

The control method by this power conversion device 1 will be described. As illustrated in FIG. 5, the power conversion device 1 includes a controller 6. The controller 6 controls the chopper cells 3 in each phase arm 2, and the first to the fourth switches 41, 42, 43, and 44 in each phase. The controller 6 is a so-called computer or a special-purpose electric circuit that executes calculation and control in accordance with a program. For example, in the controller 6, a CPU executes calculation in accordance with the program stored in a ROM, and a drive circuit for the chopper cells 3 in each phase arm 2 and the first to the fourth switches 41, 42, 43, and 44 in each phase transmits a gate signal in accordance with the calculation result. Values of the current and the voltage detected at each upper arm 21 and lower arm 22 by unillustrated current detector and voltage detector are input to this controller 6, calculation is executed with the current value and the voltage value being parameters, and a calculation result is utilized for voltage control.

This controller 6 includes an upper-lower arm balance control unit 61 and an inter-phase balance control unit 62. The upper-lower arm balance control unit 61 makes the P-N circulating current acquired by superimposing AC currents with two kinds of frequencies to flow. The upper-lower arm balance control unit 61 controls the P-N circulating current on which the AC current is superimposed, to cause the voltage of the upper arm 21 and that of the lower arm 22 to be consistent. The AC current superimposed on the P-N circulating current is sufficiently small relative to the DC component. Moreover, the power based on this AC current is $Ipn \cdot \sin(\omega t\text{-}e) \times v_dc$. Accordingly, the AC current superimposed on the P-N circulating current per a cycle is zero and does not affect the power transmission. Furthermore, the inter-phase balance control unit 62 controls the DC inter-phase circulating current, to cause the voltages between the phases to be consistent.

(Upper-Lower Arm Balance Control)

As illustrated in FIG. 5, the upper-lower arm balance control unit 61 divides the voltage imbalance between the upper arm 21 and the lower arm 22 into a set of normal-phase component and reverse-phase component (hereinafter, simply and representatively referred to as the normal-phase component), and a zero-phase component, and addresses the imbalance by causing the positive-phase component and the zero-phase component to be zero by the AC currents with two kinds of frequencies. Moreover, the upper-lower arm balance control unit 61 that controls the P-N circulating current calculates a DC component command value i_pn0* to achieve the constant DC component of the P-N circulating current.

The upper-lower arm balance control unit 61 calculates a singular frequency component command value i_pn1* for causing a voltage difference normal-phase component to be zero. The singular frequency component command value i_pn1* is a command value for the AC component of the P-N circulating current corresponding to a single-time frequency of the output AC voltage v_ac to be output to the AC power system 200.

Moreover, the upper-lower arm balance control unit 61 calculates a triple frequency component command value i_pn3* for causing a voltage difference zero-phase component to be zero. The triple frequency component command value i_pn3* is the AC component of the P-N circulating current corresponding to the three-times frequency of the output AC voltage to v_ac 3 to be output to the AC power system 200.

The upper-lower arm balance control unit 61 adds the DC component command value i_pn0*, the singular frequency component command value i_pn1*, and the triple frequency component i_pn3* to calculate a P-N circulating current command value i_pn*. Moreover, the upper-lower arm balance control unit 61 calculates a P-N circulating current i_pn, and executes proportional integral control that causes the P-N circulating current i_pn to follow the P-N circulating current command value i_pn* to acquire a P-N voltage command value v_pn*. The P-N voltage command value v pn* is a command value for the voltage from the positive-side end of the power conversion device 1 to the negative-side end thereof.

When calculating the P-N circulating current i_pn, the upper-lower arm balance control unit 61 utilizes a circulating current i_c_u in the U-phase, a circulating current i_c_v in the V-phase, and a circulating current i_c_w in the W-phase. As for the circulating current i_c_u in the U-phase, the upper-lower arm balance control unit 61 estimates from an AC current i_u in the U-phase, and a current i_n_u that flows through the reactor 7 connected to the U-phase. As for the circulating current i_c_v in the V-phase, the upper-lower arm balance control unit 61 estimates from an AC current i_v in the V-phase, and a current i_n_v that flows through the reactor 7 connected to the V-phase. As for the circulating current i_c_w in the W-phase, the upper-lower arm balance control unit 61 estimates from an AC current i_w in the W-phase, and a current i_n_w that flows through the reactor 7 connected to the W-phase.

Furthermore, the upper-lower arm balance control unit 61 utilizes, in the calculation of the singular frequency component command value i_pn1* and the triple frequency component command value i_pn3*, voltage difference normal-phase components v_ch_y_a and v_ch_y_b between the upper arm 21 and the lower arm 22, and a voltage difference zero-phase component v_ch_y_z as parameters.

This upper-lower arm balance control unit 61 subtracts the average value of the capacitor voltage of the upper arm 21 from the average value of the capacitor voltage of the lower arm 22, calculates the voltage difference between the upper arm 21 and the lower arm 22, and executes three-phase/abz conversion on the voltage differences v_ch_y_u, v_ch_y_v, and v_ch_y_w in the respective phases, to acquire the voltage difference normal-phase components v_ch_y_a and v_ch_y_b between the upper arm 21 and the lower arm 22, and the voltage difference zero-phase component v_ch_y_z. For example, in the U-phase, the voltage difference v_ch_y_u between the upper arm 21 and the lower arm 22 is acquired by subtracting an average value v_ch_up of the capacitor voltage of the upper arm 21 from an average value v_ch_un of the capacitor voltage of the lower arm 22.

FIG. 6 is a control block diagram of the voltage control that causes the voltage difference normal-phase component between the upper arm 21 and the lower arm 22 to be zero after the three-phase/abz conversion. As illustrated in FIG. 6, the upper-lower arm balance control unit 61 causes the voltage normal-phase difference components v_ch_y_a and v_ch_y_b between the upper arm 21 and the lower arm 22 to pass through a low-pass filter. The low-pass filter eliminates pulsation of the output AC voltage frequency, that is, a ripple voltage component, theoretically superimposed on the voltage difference normal-phase components v_ch_y_a and v_ch_y_b between the upper arm 21 and the lower arm 22. Although a moving-average filter or a primary delay filter, etc., is applicable as the low-pass filter, it is desirable to be designed to have a time constant that is sufficient to decrease the AC voltage frequency component.

The upper-lower arm balance control unit 61 respectively executes PI controls so as to cause the voltage difference normal-phase components v_ch_y_a and v_ch_y_b that have passed through the low-pass filter to be zero, to acquire an amplitude command value i_amp_pn_a* for the P-N circulating current in an a-phase and an amplitude command value i_amp_pn_b* for the P-N circulating current in a b-phase. Next, the upper-lower arm balance control unit 61 multiplies, by the sine function of the output AC voltage, the amplitude command value i_amp_pn_a* for the P-N circulating current in the a-phase and the amplitude command value i_amp_pn_b* for the P-N circulating current in the b-phase, to acquire a command value i_pn1_a* for the P-N circulating current in the a-phase and a command value i_pn1_b* for the P-N circulating current in the b-phase.

The sine function is $\sin\omega t$ for the amplitude command value i_amp_pn_a* for the P-N circulating current in the a-phase, and is $\sin(\omega t-\pi/2)$ for the amplitude command value i_amp_pn_b* for the P-N circulating current in the b-phase, to decides the phases in the a-phase and in the b-phase. Moreover, although the sine function is the singular frequency of the output AC voltage as an example, it may be $6N\pm1$ times (where N is a natural number). That is, it is appropriate if an AC $6N\pm1$ times frequency component i_pn1 of the P-N circulating current is controllable to cause the normal-phase voltage difference to be zero.

Next, the upper-lower arm balance control unit 61 adds the command value i_pn1_a* for the P-N circulating current in the a-phase and the command value i_pn1_b* for the P-N circulating current in the b-phase, and multiplies the addition result by a gain Gp, to calculate the command value i_pn1* for the singular frequency component for the P-N circulating current. The gain Gp is a coefficient that adjusts a control response.

For example, it is desirable that, as for this gain Gp, a modulation factor M should is considered to maintain the control response unchanged even if the modulation factor M of the output AC voltage v_ac changes. The modulation factor M of the output AC voltage v_ac is a ratio of an amplitude value v_amp of the output AC voltage v_ac relative to the DC voltage v_dc. This gain Gp is calculated from the following formula (1).

$$Gp = \frac{1}{\left(\frac{4}{3}+\frac{\sqrt{3}}{2\pi}\right)M-\frac{6}{2\pi}} \qquad \cdots(1)$$

When a change in control response is allowable, it is unnecessary to change the gain Gp in accordance with the modulation factor M, but the sign of the gain Gp follows the sign of the right-side denominator of the above formula (1) . That is, it is necessary to set the gain Gp as the following formula (2).

$$Gp = sign\left\{\left(\frac{4}{3}+\frac{\sqrt{3}}{2\pi}\right)M-\frac{6}{2\pi}\right\} \quad \cdots (2)$$

FIG. 7 is a control block diagram of the voltage control that causes the voltage difference zero-phase component between the upper arm 21 and the lower arm 22 to be zero after the three-phase/abz conversion. As illustrated in FIG. 7, the upper-lower arm balance control unit 61 executes the PI control to cause the voltage difference zero-phase component v_ch_y_z between the upper arm 21 and the lower arm 22 to be zero, to acquire an amplitude command value i_amp_pn_z* for the P-N circulating current in the zero-phase. Next, the upper-lower arm balance control unit 61 multiplies the amplitude command value i_amp_pn_z* for the P-N circulating current in the zero-phase by the sine function that has the triple frequency of the frequency of the output AC voltage, to acquire a command value i_pn1_z* for the P-N circulating current in the zero-phase.

Although the sine function is the triple frequency of the frequency of the output AC voltage as an example, it may be 3×(2N-1) times (where N is natural number) . That is, it is appropriate if 3×(2N-1) times AC frequency component of the P-N circulating current is controllable to cause the zero-phase voltage difference to be zero.

Next, the upper-lower arm balance control unit 61 multiples the command value i_pn1_z* of the P-N circulating current in the zero-phase by a gain Gz, to calculate the command value i_pn3* for the triple frequency component of the P-N circulating current. It is desirable that, as for the gain Gz, the modulation factor M is considered to maintain the control response unchanged even if the modulation factor M of the output AC voltage changes . This gain Gz is calculated from the following formula (3).

$$Gz = \frac{1}{-\frac{3\sqrt{3}}{4\pi}M+\frac{1}{6\pi}} \quad \cdots (3)$$

When a change in control response is allowable, it is unnecessary to change the gain Gz in accordance with the modulation factor M, but the sign of the gain Gz follows the sign of the right-side denominator of the above formula (3) . That is, it is necessary to set the gain Gz as the following formula (4).

$$Gz = sign\left(-\frac{3\sqrt{3}}{4\pi}M+\frac{1}{6\pi}\right) \quad \cdots (4)$$

FIG. 8 is a detailed control block diagram of the DC component of the P-N circulating current. As illustrated in FIG. 8, the upper-lower arm balance control unit 61 executes the PI control to cause the difference between the DC voltage command value v_dc* and the DC voltage v_dc to be zero, to calculate a DC component command value i_pn0* for the P-N circulating current.

The upper-lower arm balance control unit 61 adds the DC component command value i_pn0* for the P-N circulating current, the singular AC frequency component command value i_pn1*, and the triple AC frequency component command value i_pn3*, to calculate the command value i_pn* for the P-N circulating current. Next, the upper-lower arm balance control unit 61 calculates the P-N circulating current i_pn, and executes the PI control to cause the P-N circulating current i_pn to follow the command value i_pn* for the P-N circulating current, to acquire a P-N voltage command value v_pn*.

As illustrated in FIG. 9, the upper-lower arm balance control unit 61 adds the circulating currents i_c_u, i_c_v and i_c_w of the respective phase arms 2, and further multiplies the addition result by 0.5, to calculate the P-N circulating current i_pn. As illustrated in FIG. 10, the upper-lower arm balance control unit 61 adds the current i_n_u of the reactor 7 connected to the U-phase and the half of the AC current i_u that flows through the output terminal 23, and inverts the sign of the addition result in accordance with the condition, to calculate the circulating current i_c_u of the phase arm 2 in the U-phase.

When the first switch 41 in the U-phase and the third switch 43 in the U-phase are turned ON, and the second switch 42 in the U-phase and the fourth switch 44 in the U-phase are turned OFF, the sign of the addition result is maintained, and the addition result is taken as the circulating current i_c_u in the U-phase. Conversely, when the first switch 41 in the U-phase and the third switch 43 in the U-phase are turned OFF, and the second switch 42 in the U-phase and the fourth switch 44 in the U-phase are turned ON, the sign of the addition result is inverted, and the addition result that has the inverted sign is taken as the current i_c_u in the U-phase.

Similarly, the upper-lower arm balance control unit 61 adds the current i_n_v of the reactor 7 connected to the V-phase and the half of the AC current i_v that flows through the output terminal 23, and inverts the sign of the addition result in accordance with the condition, to calculate the circulating current i_c_v of the phase arm 2 in the V-phase.

When the first switch 41 in the V-phase and the third switch 43 in the V-phase are turned ON, and the second switch 42 in the V-phase and the fourth switch 44 in the V-phase are turned OFF, the sign of the addition result is maintained, and the addition result is taken as the circulating current i_c_v in the V-phase. Conversely, when the first switch 41 in the V-phase and the third switch 43 in the V-phase are turned OFF, and the second switch 42 in the V-phase and the fourth switch 44 in the V-phase are turned ON, the sign of the addition result is inverted, and the addition result that has the inverted sign is taken as the current i_c_v in the V-phase.

Similarly, the upper-lower arm balance control unit 61 adds the current i_n_w of the reactor 7 connected to the W-phase and the half of the AC current i_w that flows through the output terminal 23, and inverts the sign of the addition result in accordance with the condition, to calculate the circulating current i_c_w of the phase arm 2 in the W-phase.

When the first switch 41 in the W-phase and the third switch 43 in the W-phase are turned ON, and the second switch 42 in the W-phase and the fourth switch 44 in the W-phase are turned OFF, the sign of the addition result is maintained, and the addition result is taken as the circulating current i_c_w in the W-phase. Conversely, when the first switch 41 in the W-phase and the third switch 43 in the W-phase are turned OFF, and the second switch 42 in the W-phase and the fourth switch 44 in the W-phase are turned ON, the sign of the addition result is inverted, and the addition result that has the inverted sign is taken as the current i_c_w in the W-phase.

(First Inter-Phase Balance Control)

The inter-phase balance control unit 62 suppresses a voltage difference between specific two phases for each voltage phase that is 60 degrees. The specific two phases are a set of phases which are connected in parallel, and which have the same polarity of the voltage command value. Since the two phases connected in parallel changes for each voltage phase that is 60 degrees change, the voltage balance among the three phases can be achieved through several times of changes in the connection relation. This inter-phase balance control unit 62 controls the inter-phase circulating DC current that flows between the specific two phase, to suppress a voltage difference.

A first voltage control example by the inter-phase balance control unit 62 is illustrated in FIGS. 11(a) to 11(c). As illustrated in FIGS. 11(a) to 11(c), the inter-phase balance control unit 62 calculates a circulating current command value between the two phases which causes the voltage difference in the two phases with the same polarity of the voltage command value to be zero, and derives respective DC voltage command values in the two phases that causes the actual circulating current in the two phases to follow the command value.

An example case in which the W-phase and the V-phase have the same polarity will be described. As illustrated in FIG. 11(a), the inter-phase balance control unit 62 acquires a difference between an average capacitor voltage v_ch_w of the all chopper cells 3 in the W-phase and an average capacitor voltage v_ch_v of the all chopper cells 3 in the V-phase, and multiplies the acquired difference by 0.5, and further executes the PI control to cause the multiplication result to be zero, to calculate an inter-phase circulating current command value i_dc_wv* between the W-phase and the V-phase. Moreover, the inter-phase balance control unit 62 acquires a difference between the inter-phase circulating current i_dc_w detected in the W-phase and the inter-phase circulating current i_dc_v detected in the V-phase, and multiplies the acquired difference by 0.5, to calculate an inter-phase circulating current i_dc_wv between the W-phase and the V-phase.

Next, the inter-phase balance control unit 62 executes the PI control to cause the inter-phase circulating current i_dc_wv between the W-phase and the V-phase to follow the inter-phase circulating current command value i_dc_wv* between the W-phase and the V-phase, to calculate a DC voltage command value v_dc_w0* in the W-phase. Moreover, the inter-phase balance control unit 62 inverts the polarity of the DC voltage command value v_dc_w0* in the W-phase, to calculate a DC voltage command value v_dc_v0* in the V-phase.

Similarly, as illustrated in FIG. 11(b), the inter-phase balance control unit 62 calculates, when the polarity of the voltage command value in the V-phase and the U-phase are the same, an inter-phase circulating current command value i_dc_vu* between the two phases which causes the capacitor voltage difference between the V-phase and the U-phase to be zero, and derives respective DC voltage command values v_dc_u0* and v_dc_v0* in the two phases which cause the inter-phase circulating current i_dc_vu between the V-phase and the U-phase to follow this command value i_dc_vu* by the PI control.

Moreover, as illustrated in FIG. 11(c), the inter-phase balance control unit 62 calculates, when the polarity of the voltage command value in the U-phase and the W-phase are the same, an inter-phase circulating current command value i_dc_uw* between the two phases which causes the capacitor voltage difference between the U-phase and the W-phase to be zero, and derives respective DC voltage command values v_dc_u0* and v_dc_w0* in the two phases which cause the actual inter-phase circulating current i_dc_uw between the U-phase and the W-phase to follow this command value i_dc_uw* by the PI control.

(Second Inter-Phase Balance Control)

FIGS. 12(a) to 12(c) illustrate a second voltage control example by the inter-phase balance control unit 62. The inter-phase balance control unit 62 may execute a control that causes the voltages of two phases connected in series within a circuit to be consistent. By setting a difference in the output voltages of the two series phases, the input power to the one phase can be increased and the input power to the other phase can be decreased, correcting the voltage difference in a direction of balancing the voltage difference of the both. By causing the total of the increased voltage and the decreased voltage to be zero, the entire voltage between the positive side of the power conversion device 1 and the negative side thereof remains unchanged, and does not affect the P-N circulating current.

An example case will be described in which a voltage command value v_w* in the W-phase and a voltage command value v_v* in the V-phase have the same polarity, that is, the U-phase and the W-phase are connected in series and the U-phase and the V-phase are connected in series. As illustrated in FIG. 12(a), the inter-phase balance control unit 62 executes the proportional integral so as to cause a difference between the capacitor voltage average value v_ch_u in the U-phase and the capacitor voltage average values in the V-phase and the W-phase to be zero, to calculate DC voltage command values v_dc_u0*, v_dc_v0*, and v_dc_w0* in the respective phases which eliminate the voltage difference between the U-phase and the V-phase and the voltage difference between the U-phase and the W-phase.

Typically, the inter-phase balance control unit 62 adds a capacitor voltage average value V_ch_v in the V-phase and a capacitor voltage average value V_ch_w in the W-phase, and multiplies the addition result by 0.5, to calculate the capacitor voltage average values in the V-phase and the W-phase. Next, the inter-phase balance control unit 62 subtracts the capacitor voltage average value in the V-phase and the W-phase from a capacitor voltage average value V_ch_u in the U-phase, multiplies the subtraction result by 0.5, and then executes the proportional integral control to cause the multiplication result to be zero. The inter-phase balance control unit 62 further multiplies the proportional integral control result by a gain Gpz.

The gain Gpz is a coefficient that adjusts the control response. It is desirable that this gain Gph should be designed to maintain the control response unchanged regardless of the P-N circulating current. For example, the gain Gpz is an inverse number of the absolute value of a current i_dc_u that flows in the U-phase like the following formula (5) .

$$Gpz = \frac{1}{|i_dc_u|} \quad \cdots (5)$$

Finally, the inter-phase balance control unit 62 multiplies the inverse polarity of the current i_dc_u in the U-phase, to calculate the DC voltage command value v_dc_u0* in the U-phase. The inter-phase balance control unit 62 inverts the polarity of the DC voltage command value v_dc_u0* in the U-phase, to calculate the DC voltage command value v_dc_v_0* in the V-phase, and the DC voltage command value v_dc_w0* in the W-phase.

Similarly, as illustrated in FIG. 12(b), the inter-phase balance control unit 62 executes the proportional integral to cause the difference between the capacitor voltage average value v_ch_w in the W-phase and the capacitor voltage average values in the U-phase and the V-phase to be zero, to calculate the DC voltage command values v_dc_u0*, v_dc_v0* and v_dc_w0* in the respective phases that eliminate the voltage difference between the W-phase and the U-phase, and the voltage difference between the W-phase and the V-phase.

Moreover, as illustrated in FIG. 12(c), the inter-phase balance control unit 62 executes the proportional integral so as to cause the difference between the capacitor voltage average value v_ch_v in the V-phase and the capacitor voltage average values in the U-phase and the W-phase to be zero, to calculate the DC voltage command values v_dc_u0*, v_dc_v0*, and v_dc_w0* in the respective phases that eliminate the voltage difference between the V-phase and the U-phase and the voltage difference between the V-phase and the W-phase.

(Overall Control)

Returning to FIG. 5, the controller 6 adds the P-N voltage command value v_pn* to each DC voltage command values v_dc_u0*, v_dc_v0* and v_dc_w0* in the respective phases calculated by the upper-lower arm balance control unit 61 and the inter-phase balance control unit 62, and applies the addition results for the calculation of the voltage command values v_up*, v_un*, v_vp*, v_vn*, v_wp*, and v_wn* for the upper arm and the lower arm in the respective phases. In this calculation, the voltage command values v_u*, v v*, and v_w* to achieve a constant average of the capacitor voltages across all the chopper cells 3 among the three phases may also be considered.

In the calculation of the voltage command values v_u*, v_v*, and v_w*, the controller 6 executes the control that causes the average value of the capacitor voltages of all the chopper cells 3 to be a predetermined value by an active component i_d of the AC current that flows into the chopper cells 3. First, an average value v_ch of the capacitor voltages of all the chopper cells 3 are calculated, and a D-axis current command value i_d* to follow a command value v_ch* is calculated.

As illustrated in FIG. 13, the controller 6 calculates the average value v_ch of the capacitor voltages of all the chopper cells 3, acquires a difference between the command value v_ch* and the average value v_ch, and executes the PI control so as to cause this difference to be zero, to calculate the D-axis current command value i_d*.

Moreover, the controller 6 executes a three-phase/DQ conversion on the output AC currents i_u, i_v, and i_w in the respective phases received from the current detectors, to calculate a D-axis current i_d and a Q-axis current i_q.

Next, the controller 6 executes the PI control so that the D-axis current i_d and the Q-axis current i_q follow the D-axis current command value i_d* and a Q-axis current command value i_q*, to calculate a D-axis voltage command value v_d* and a Q-axis voltage command value v_q*, and further executes a DQ/three-phase conversion on the D-axis voltage command value v_d* and the Q-axis voltage command value v_q*, to acquire the voltage command values v_u*, v_v*, and v_w*.

Since the calculation scheme of the voltage command values v_up*, v_un*, v_vp*, v_vn*, v_wp*, and v wn* for the upper arm 21 and the lower arm 22 in the respective phases and the calculation method in the V-phase and the W-phase are the same, the following description will be given of examples that are the voltage command values v_up* and v un* for the upper arm 21 and the lower arm 22 in the U-phase.

As illustrated in FIG. 14, the controller 6 adds, to the DC voltage command value v_dc_u* for achieving a balance between the phases and between the upper and lower arms 21 and 22, a value acquired by multiplying the DC voltage V_dc/2 by the polarity of the voltage command value v_u* in the U-phase, further multiplies the addition result by 0.5, and subtracts the voltage command value v_u* in the U-phase from the multiplication result. The voltage command value v_up* for the upper arm 21 in the U-phase is calculated by this calculation.

Moreover, the controller 6 subtracts, from the DC voltage command value v_dc_u* for achieving a balance between the phases and between the upper and lower arms 21 and 22, a value acquired by multiplying the DC voltage v_dc/2 by the polarity of the voltage command value v_u* in the U-phase, further multiplies the subtraction result by 0.5, and subtracts the voltage command value v_u* in the U-phase from the multiplication result. The voltage command value v_un* for the lower arm in the U-phase is calculated by this calculation.

FIG. 15 is a control block diagram for making a capacitor voltage across the chopper cells 3 the same. When causing the upper and lower arms 21 and 22 in the respective phases to output the voltages, the controller 6 further executes a control that causes the capacitor voltages of all the chopper cells 3 in the upper arm 21 to be the same, and the capacitor voltages of all the chopper cells 3 in the lower arm 22 to be the same.

That is, since the capacitor 33 of the chopper cell 3 is charged when the polarity of the current that flows through the chopper cell 3 is positive, the controller 6 increases the output voltage of the chopper cell 3 that has the small capacitor voltage, and decreases the output voltage of the chopper cell 3 that has the large capacitor voltage. Since the capacitor 33 is discharged when the polarity of the current that flows through the chopper cell 3 is negative, the control unit decreases the output voltage of the chopper cell 3 that has the small capacitor voltage, and increases the output voltage of the chopper cell 3 that has the large capacitor voltage.

The chopper cells 3 of the upper arm 21 in the U-phase is taken as an example. For example, as for the first chopper cell 3 in the upper arm 21, the capacitor voltage average value v_ch_up of all the chopper cells 3 in the upper arm 21 is subtracted from a capacitor voltage v_ch_up1 of the first chopper cell 3, and the subtraction result is multiplied by a proportional integral gain.

The multiplication result is further multiplied by a value that is the current i_ip of the upper arm 21 in the U-phase with the inverted polarity, and the voltage command value v_up* for the chopper cells 3 of the upper arm 21 in the U-phase is added to the multiplication result. By the above calculation, a voltage command value v_up1* for the first chopper cell 3 of the upper arm 21 is calculated. Similarly, a voltage command value v_up2* for the second chopper cell 3 in the upper arm 21, and a voltage command value v_up3* for the third chopper cell therein are calculated.

Next, the controller 6 controls the respective chopper cells 3 in accordance with the voltage command values v_up1*, v_up2*, v_up3*, and the like, for the respective chopper cells 3. At this time, as illustrated in FIG. 16, when the voltage command value v_u* in the U-phase commands the positive voltage, the controller 6 turns ON the first switch 41 and the third switch 43, and turns OFF the second switch 42 and the fourth switch 44. The case in which the voltage command value v_u* in the U-phase commands the positive voltage is a case in which the output AC voltage of the output terminal 23 included in the U-phase arm 2 is increased beyond the DC neutral-point voltage at the neutral-point 5.

Hence, as for the entire upper arm 21 in the U-phase, in accordance with the voltage command value v_up*, a difference voltage between the DC positive voltage v dc/2 of the DC power supply 100 and the output AC voltage command value v_u* is output. As for the entire lower arm 22 in the U-phase, in accordance with the voltage command value v_un*, a difference voltage between the output AC voltage command value v_u* and the DC neutral-point is output.

Moreover, as illustrated in FIG. 16, when the voltage command value v_u* in the U-phase commands the negative voltage, the controller 6 turns ON the second switch 42 and the fourth switch 44, and turns OFF the first switch 41 and the third switch 43. The case in which the voltage command value v_u* in the U-phase commands the negative voltage is a case in which the output AC voltage of the output terminal 23 included in the U-phase arm 2 is decreased below the DC neutral-point voltage at the neutral-point 5.

Hence, as for the entire upper arm 21 in the U-phase, in accordance with the voltage command value v_up*, a difference voltage between the DC neutral-point voltage and the voltage command value v_u* for the output AC voltage is output, and as for the entire lower arm 22 in the U-phase, in accordance with the voltage command value v_un*, a difference voltage between the voltage command value v_u* for the output AC voltage, and the DC negative voltage -v_dc/2 of the DC power supply 100 is output.

As illustrated in FIG. 17, when the ON and OFF of the group including the first switch 41 and the third switch 43, and the group including the second switch 42 and the fourth switch 44 are interchanged, the first to fourth switches 41 to 44 take a plurality of the ON and OFF states.

When bidirectionally transitioning the states between the state in which the output AC voltage is larger than the DC neutral-point voltage and the state in which the output AC voltage is smaller than the DC neutral-point voltage, the controller 6, in the second switch 42 and the third switch 43, first turns OFF the switch which is ON, and then turns ON the switch which is OFF. Hence, since both the second switch 42 and the third switch 43 is turned ON, a short-circuit between the upper arm 21 and the lower arm 22 via the second switch 42 and the third switch 43 is avoided.

Moreover, after changing the ON and OFF of the second switch 42 and the third switch 43, the controller 6 changes the ON and OFF of the first switch 41 and the fourth switch 44. The ON and OFF of the second switch 42 and the third switch 43 may be changed after the ON and OFF of the first switch 41 and the fourth switch 44 are changed.

Furthermore, the controller 6, in the first switch 41 and the fourth switch 44, first turns OFF the switch which is ON, and then turns ON the switch which is OFF. Hence, since the third switch 43 becomes OFF, and the first switch 41, the second switch 42, and the fourth switch 44 become ON, an application of the DC input voltage of the DC power supply 100 to the third switch 43 is avoided.

More specifically, during a transition procedure from a (first state) in which the first switch 41 and the third switch 43 are ON and the second switch 42 and the fourth switch 44 are OFF to a (fifth state) in which the first switch 41 and the third switch 43 are OFF and the second switch 42 and the fourth switch 44 are ON, the transition progresses through a second state, a third state, and a fourth state in this order. In the second state, the controller 6 changes only the third switch 43 from ON to OFF. In the third state, only the second switch 42 is changed from OFF to ON. In the fourth state, the first switch 41 is changed from ON to OFF. Next, in the fifth state, the fourth switch 44 is changed from OFF to ON.

Moreover, during a transition procedure from the (fifth state) in which the first switch 41 and the third switch 43 are OFF and the second switch 42 and the fourth switch 44 are ON to the (first state) in which the first switch 41 and the third switch 43 are ON and the second switch 42 and the fourth switch 44 are OFF, the transition progresses through a sixth state, a seventh state, and an eighth state in this order. In the sixth state, the controller 6 changes only the second switch 42 from ON to OFF. In the seventh state, the controller 6 changes only the third switch 43 from OFF to ON. In the eighth state, the controller 6 changes only the fourth switch 44 from ON to OFF. Next, in the first state, the controller 6 changes the first switch 41 from OFF to ON.

When the controller 6 transitions the state from the fifth state to the sixth state, as illustrated in FIGS. 18 (a) and 18(b), the path for the circulating AC current is changed. That is, as illustrated in FIG. 18(a), due to the presence of the reactor 7 between the U-phase and the V-phase, in the fifth state, the circulating AC current flows through the output terminal 23 in the U-phase, the upper arm 21 in the U-phase, the second switch 42 in the U-phase, the neutral-point 5 in the U-phase, the reactor 7, the third switch 43 in the V-phase, the lower arm 22 in the V-phase, and the output terminal 23 in the V-phase.

Next, as illustrated in FIG. 18(b), in the sixth state, since the reactor 7 attempts to maintain the circulating AC current that flows through itself even when the second switch 42 is changed from ON to OFF, the flow of the circulating AC current changes to the path that is the output terminal 23 in the U-phase, the lower arm 22 in the U-phase, the third switch 43 in the U-phase, the neutral-point 5 in the U-phase, the reactor 7, the third switch 43 in the V-phase, the lower arm 22 in the V-phase, and the output terminal 23 in the V-phase. Hence, application of the voltage that is equal to or greater than the half of the DC input voltage of the DC power supply 100 to the second switch 42 in the U-phase is avoided.

As illustrated in FIG. 19, in each of the individual chopper cell 3, when the voltage command value v_up1* is taken as an example, the controller 6 compares a carrier triangular wave car_up1 v_up1*. When the output voltage command value v_up1* is greater than the carrier triangular wave car_up1, the controller 6 turns ON the switch 31 and turns OFF the switch 32 to charge and discharge the capacitor 33. When the output voltage command value v_up1* is smaller than the carrier triangular wave car_up1, the controller 6 turns OFF the switch 31 and turns ON the switch 32 to stop the capacitor from outputting the voltage.

When the upper arm 21 and the lower arm 22 each include n number of chopper cells, by shifting the phase of the carrier triangular wave for each 360/n degrees, an equivalent carrier frequency can be n times the carrier triangular wave frequency, and the harmonic voltage in the output AC voltage can be reduced. Moreover, the harmonic voltage in the output AC voltage can be further reduced by shifting the phase of the carrier triangular wave applied for the lower arm 22 by 180 degrees relative to the upper arm 21.

(Action and Effect)

As described above, this power conversion device 1 is an NPC-MMC that includes the phase arms 2 and the valves 4 in each phase. The phase arm 2 includes the plurality of chopper cells 3 connected in series, the chopper cells 3 in the phase arm 3 are divided and recognized into the upper arm 21 and the lower arm 22, and the valve 4 includes the first switch 41 to the fourth switch 44. The first switch 41 and the fourth switch 44 are provided at ends of the phase arm 2, and are provided between the phase arm 2 and the DC power supply 100. The second switch 42 and the third switch 43 are connected in series between the first switch 41 and the fourth switch 44, and are connected in parallel with the phase arm 2. Moreover, the neutral-point 5 is provided between the second switch 42 and the third switch 43, and each neutral-points 5 are connected with each other via the respective reactors 7.

Accordingly, an occasion, which the DC input voltage of the DC power supply 100 is applied to the switch when said switch in the path for the circulating AC current including the reactor 7 changes to OFF, is avoided, and the withstand voltage of the first switch 41 to the fourth switch 44 can be reduced up to equal to or greater than the half of the DC input voltage. Hence, this power conversion device 1 is capable of avoiding an increase in number of the switching elements that form the first switch 41 to the fourth switch 44 without the need of an input DC capacitor, and achieves cost reduction and downsizing.

Moreover, this power conversion device 1 includes the controller 6 that controls the chopper cells 3 and the first to fourth switches 41 to 44. The controller 6 turns ON the first switch 41 and the third switch 43 connected to the phase arm 2, and turns OFF the second switch 42 and the fourth switch 44, when increasing the output AC voltage of the output terminal 23 of the phase arm 2 to be greater than the DC neutral-point voltage at the neutral-point 5. Furthermore, the controller 6 turns OFF the first switch 41 and the third switch 43 connected to the phase arm 2, and turns ON the second switch 42 and the fourth switch 44, when decreasing the output AC voltage of the output terminal 23 of the phase arm 2 to be smaller than the DC neutral-point voltage at the neutral-point 5.

Next, when bidirectionally transitioning the states between the state in which the output AC voltage is greater than the DC neutral-point voltage and the state in which the output AC voltage is smaller than the DC neutral-point voltage, the controller 6 turns OFF the second switch 42 or the third switch 43 that are ON before turning ON the second switch 42 or the third switch 43 that are OFF. Hence, the second switch 42 and the third switch is prevented from simultaneously turned ON even by a reaching delay of the drive signal and a change in response of the second switch and the third switch. Accordingly, a short-circuit between the upper arm 21 and the lower arm 22 via the second switch 42 and the third switch 43 is avoided, and an excessive current by short-circuit is prevented.

Similarly, when bidirectionally transitioning the states between the state in which the output AC voltage is greater than the DC neutral-point voltage and the state in which the output AC voltage is smaller than the DC neutral-point voltage, the controller 6 turns OFF the first switch 41 or the fourth switch 44 that are ON before turning ON the first switch 41 or the fourth switch 44 that are OFF. Hence, the first switch 41, the second switch 42, and the fourth switch 44 are not turned ON while the third switch 43 is OFF. Accordingly, an occasion in which only the third switch 43 is turned OFF and the DC input voltage of the DC power supply 100 is applied to the third switch 43 is avoided, and the withstand voltage of the first to fourth switches 41 to 44 can be equal to or greater than half the DC input voltage.

Furthermore, the AC current is superimposed on the P-N circulating current to suppress a voltage difference between the upper arm 21 and the lower arm 22 by the AC current. Hence, even if there is only one path through which the P-N circulating current flows, the voltage difference between the upper arm 21 and the lower arm 22 can be suppressed. Since the power based on the AC current per a cycle is zero, the voltage difference between the upper arm 21 and the lower arm 22 can be suppressed without affecting the transmitted power. Accordingly, the power conversion device 1 that is an NPC-MMC can achieve a stabilization of capacitor voltage between the upper arm 21 and the lower arm 22.

When, for example, the AC current to be superimposed is two kinds of currents that have different frequencies, as for the imbalance of the voltage difference between the upper arm 21 and the lower arm 22, the normal-phase component and the reverse-phase component are suppressed by one AC current, and the zero-phase component is suppressed by the other AC current. Although the AC current for the normal-phase component and the reverse-phase component is set to be 1 time as much as the output AC frequency at the output terminal, as long as such an AC current have a $6N \pm 1$ (where N is a natural number) times frequency, the voltage difference can be similarly and easily controlled. Moreover, although the AC current for the zero-phase component is set to be 3 times the output AC frequency at the output terminal, as long as such an AC current have a $3 \times (2N-1)$ (where N is a natural number) times frequency, the voltage difference can be similarly and easily controlled.

Although the P-N circulating current is calculated from the circulating currents in each phase, the controller 6 adds the respective halves of the AC currents i_u, i_v, and i_w flowing through the respective output terminals 23 to the currents i_n_u, i_n_v, and i_n_w flowing through the respective reactors 7, when turning ON the first switch 41 and the third switch 43 while turning OFF the second switch 42 and the fourth switch 44, to detect the circulating currents i_c_u, i_c_v, and i_c_w in the respective phases. The controller adds the respective halves of the AC currents i_u, i_v, and i_w flowing through the respective output terminals 23 to the currents i_n_u, i_n_v, and i_n_w flowing through the respective reactors 7, and inverts the sign of the addition values, when turning OFF the first switch 41 and the third switch 43 while turning ON the second switch 42 and the fourth switch 44, to detect the circulating currents i_c_u, i_c_v, and i_c_w in the respective phases.

It is general that the current path through the phase arm 2 is connected by a bus bar to decrease an inductance, making it difficult to insert a current sensor. According to this power conversion device 1, since each phase is connected by a circulating current cable, and the circulating currents i_c_u, i_c_v, and i_c_w in the respective phases are estimated by utilizing the AC current i_u, etc., that flows through a path where installation of a current sensor is easy, and the current i_n_u, etc., that flows through the reactor 7, the production of the power conversion device 1 is facilitated, decreasing the production costs.

The proportional integral control that causes the normal-phase component and the reverse-phase component to be zero is executed, and the control gain Gp of the proportional integral control is changed in accordance with the modulation rate of the output AC voltage of the output terminal. Moreover, the proportional integral control that causes the zero-phase component to be zero is executed, and the control gain Gz of the proportional integral control is changed in accordance with the modulation rate of the output AC voltage of the output terminal. Accordingly, a control response is constant even if the modulation rate M changes.

Furthermore, the low-pass filter detects the normal-phase component and the reverse-phase component in the voltage imbalance between the upper arm 21 and the lower arm 22. This eliminates a pulsation of the output AC voltage frequency, that is, a ripple voltage component.

Moreover, this power conversion device 1 flows the inter-phase circulating current that flows between the phase arms 2 connected in parallel, and controls the inter-phase circulating current to suppress an imbalance of the voltage difference between the phase arms 2 connected in parallel. Alternatively, this power conversion device 1 controls the voltage command value for the phase arms 2 in the two phases connected in series to suppress the imbalance of the voltage difference between the phase arms 2 in the two phases connected in series. Accordingly, the power conversion device 1 that is an NPC-MMC can achieve the stabilization of the voltage without the output voltage between the phases.

As for the scheme exemplified in FIGS. 11(a) to 11(c) that is flowing the inter-phase circulating current between the phase arms 2 connected in parallel , and controlling such an inter-phase circulating current to suppress the imbalance of the voltage difference between the phase arms connected in parallel, and the scheme exemplified in FIGS. 12(a) to 12(c) that is controlling the voltage command value for the phase arms 2 in the two phases connected in series to suppress the imbalance of the voltage difference between the phase arms 2 in the two phases connected in series, either one scheme may be applied or both schemes may be applied.

When both schemes are applied, since the parallel two phases achieve a voltage balance by the inter-phase circulating current, and the series two phases achieve the voltage balance by having a difference in output voltage, a balance among the three phases can be achieved even in any voltage phase, and the balance among the three phases can be promptly and precisely achieved. Moreover, when it is attempted to achieve a balance by the inter-phase circulating current, the balance between the phases can be achieved in a condition in which a power transmission is suspended, immediately after the activation, and in a stand-by condition.

Although the description has been given of an example case in which the power conversion device 1 is applied to a three-phase AC, as long as there are equal to or greater than two phases, it is not limited to three phases, and it is appropriate as long as there are equal to or greater than two phases to achieve the power conversion device connecting the neutral-points 5 via the reactors 7. When the power conversion device 1 is applied to a two-phase AC, the scheme exemplified in FIGS. 12(a) to 12(c) and of controlling the voltage command value for the phase arms 2 in the two phases connected in series to suppress the imbalance of the voltage difference between the phase arms 2 in the two phases connected in series is applicable.

In order to suppress the imbalance of the voltage difference between the phase arms 2 in the two phases connected in series by controlling the voltage command value for the phase arms 2 in the two phases connected in series, in the phase arms 2 in the two phases connected in series, the voltage command value for the one phase arm 2 may be increased, the voltage command value for the other phase arm 2 may be decreased to cause the total of the increase in the voltage command value for the one phase arm 2 and the decrease in the voltage command value for the other phase arm 2 to be zero.

At this time, by executing the proportional integral control that causes both the voltages of the phase arms 2 in the two phases connected in series to become zero, and by changing the control gain Gpz of the proportional integral control in accordance with the current that flows through the phase arm 2, the constant control response can be achieved.

(Other embodiments)

In this specification, although the embodiment according to the present disclosure has been described, such an embodiment is merely presented as an example, and is not intended to limit the scope of the present disclosure. The above embodiment can be carried out in other various forms, and various omissions, replacements, and modifications can be made thereto without departing from the scope of the present disclosure. Such embodiments and modified forms thereof are within the scope of the present disclosure, and also within the scope of the invention as recited in the appended claims and the equivalent range thereto.

REFERENCE SIGNS LIST

| | |
|---|---|
| 1 | Power conversion device |
| 2 | Phase arm |
| 21 | Upper arm |
| 22 | Lower arm |
| 23 | Output terminal |
| 3 | Chopper cell |
| 31 | Switch |
| 32 | Switch |
| 33 | Capacitor |
| 34 | Diode |
| 4 | Valve |
| 41 | First switch |
| 42 | Second switch |
| 43 | Third switch |
| 44 | Fourth switch |
| 5 | Neutral-point |
| 6 | Controller |
| 61 | Upper-lower arm balance control unit |
| 62 | Inter-phase balance control unit |
| 7 | Buffer reactor |
| 100 | DC power supply |
| 200 | AC power system |
| 201 | Three-phase transformer |

**Claims**

**1.** A power conversion device provided between a DC power supply and an AC power system, and mutually converting AC and DC, the power conversion device comprising:

respective phase arms in a plurality of phases, each of the phase arms comprising a plurality of chopper cells connected in series;
an upper arm and a lower arm formed by dividing the chopper cells in the phase arm into two;
an output terminal provided between the upper arm and the lower arm, and connected to the AC power system;
a first switch and a fourth switch provided at both ends of the phase arm and provided between the phase arm and the DC power supply;
a second switch and a third switch connected in series between the first switch and the fourth switch, and connected in parallel with the phase arm;
respective neutral-points in the plurality of phases each provided between the second switch and the third switch, and connected with each other; and
a reactor provided between the respective neutral-points in the plurality of phases.

**2.** The power conversion device according to claim 1, further comprising a controller that controls the chopper cells and the first to fourth switches, wherein the controller:

turns ON the first switch and the third switch connected to the phase arm, and turns OFF the second switch and the fourth switch when increasing an output AC voltage of the output terminal of the phase arm to be greater than a DC neutral-point voltage at the neutral-point; and
turns OFF the first switch and the third switch connected to the phase arm, and turns ON the second switch and the fourth switch when decreasing the output AC voltage of the output terminal of the phase arm to be smaller than the DC neutral-point voltage at the neutral-point.

**3.** The power conversion device according to claim 2, wherein when bidirectionally transitioning states between a state in which the output AC voltage is greater than the DC neutral-point voltage and a state in which the output AC voltage is smaller than the DC neutral-point voltage, the controller first turns OFF the second switch or the third switch that is ON before turning ON the second switch or the third switch that is OFF.

**4.** The power conversion device according to claim 3, wherein when bidirectionally transitioning the states between the state in which the output AC voltage is greater than the DC neutral-point voltage and the state in which the output AC voltage is smaller than the DC neutral-point voltage, the controller changes the ON and OFF of the first switch and the fourth switch after changing the ON and OFF of the second switch and the third switch.

**5.** The power conversion device according to claim 4, wherein when bidirectionally transitioning the state between the state in which the output AC voltage is greater than the DC neutral-point voltage and the state in which the output AC voltage is smaller than the DC neutral-point voltage, the controller turns OFF the first switch and the fourth switch that are ON before turning ON the first switch and the fourth switch that are OFF.

**6.** The power conversion device according to any one of claims 2 to 5, wherein the controller:

controls the first to fourth switches to create the phase arms connected in series;
controls the chopper cells to superimpose an AC current on a P-N circulating current that circulates between a positive side of the DC power supply and a negative side thereof through the phase arms connected in series; and
controls the AC current to suppress an imbalance of a voltage difference between the upper arm and the lower arm,

wherein the controller:

calculates the P-N circulating current based on circulating currents flowing through the respective phase arms in the plurality of phases;
adds halves of the AC currents flowing through the respective output terminals to the currents flowing through the respective reactors when turning ON the first switch and the third switch while turning OFF the second switch and the fourth switch to detect respective circulating currents in the plurality of phases; and
adds the halves of the AC currents flowing through the respective output terminals to the currents flowing through the respective reactors when turning OFF the first switch and the third switch while turning ON the second switch and the fourth switch, and inverts a sign of addition values to detect the circulating currents in the plurality of phases.

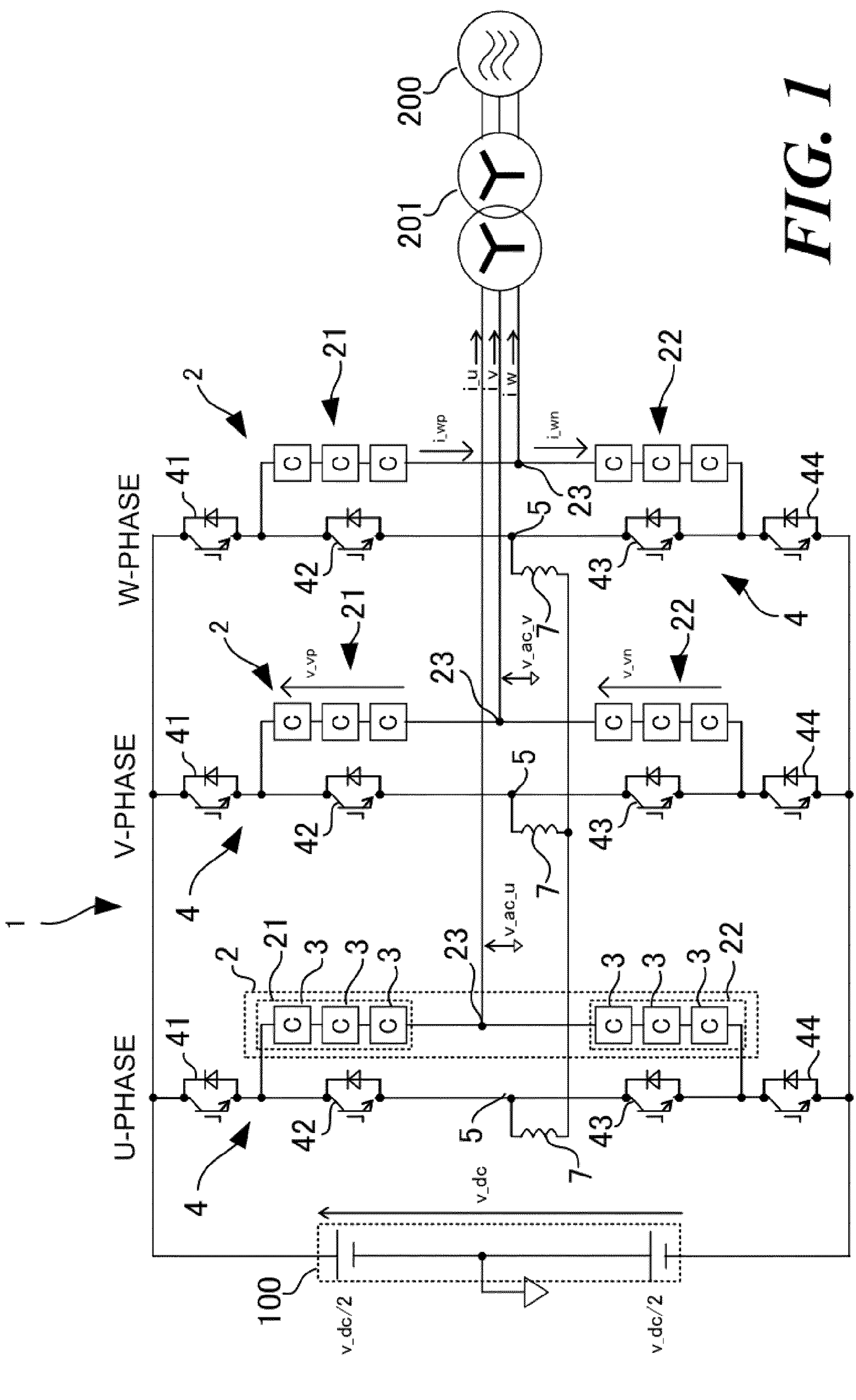
U-PHASE
V-PHASE
W-PHASE
1
2
21
22
23
3
4
41
42
43
44
5
7
100
200
201
i_u
i_v
i_w
i_wp
i_wn
v_vp
v_vn
v_ac_u
v_ac_v
v_dc
v_dc/2
v_dc/2
C

FIG. 1

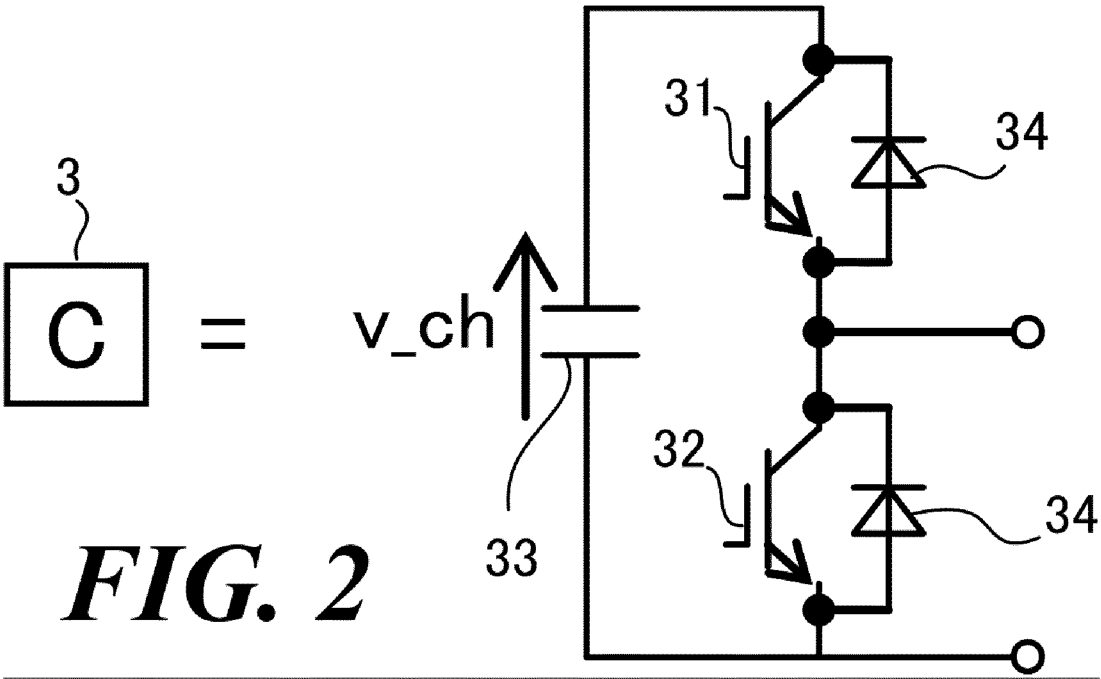


*FIG. 2*

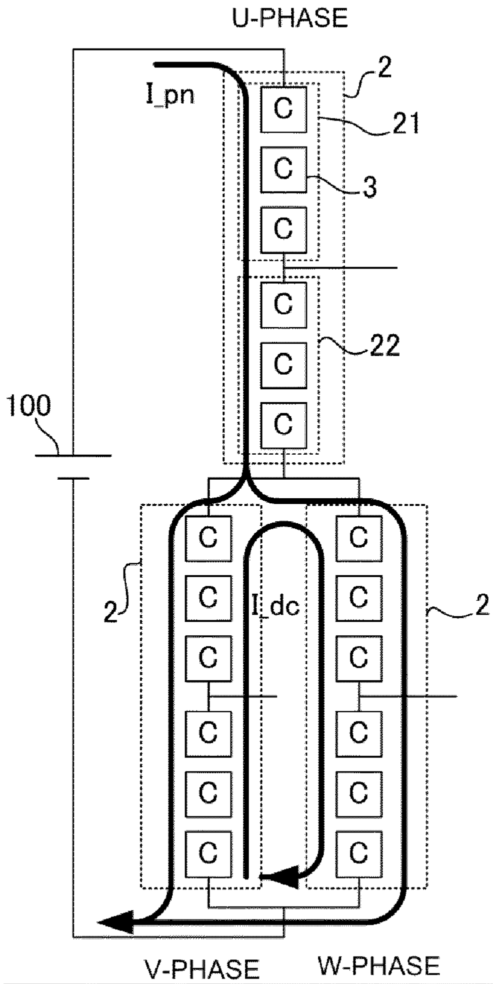
U-PHASE
I_pn
2
21
3
22
100
2
I_dc
2
C
V-PHASE
W-PHASE

FIG. 3A

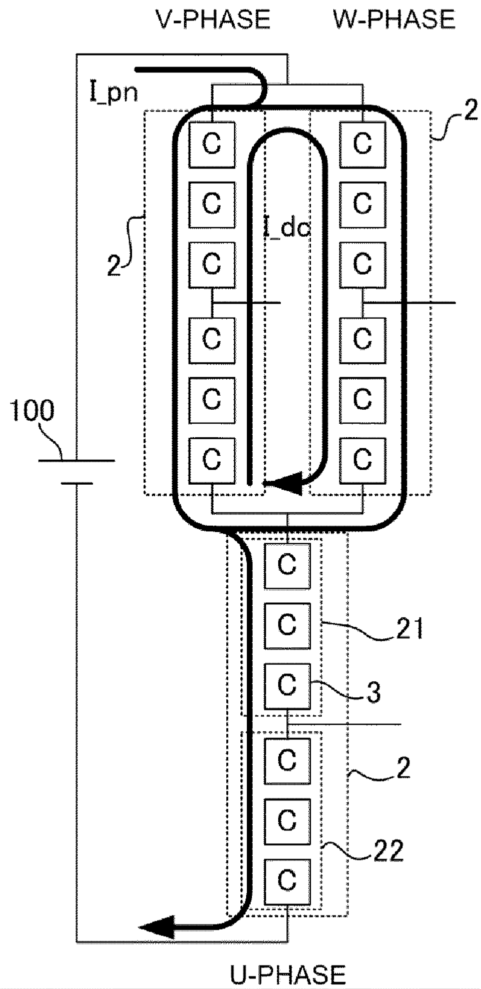
V-PHASE
W-PHASE
I_pn
2
I_dc
2
100
21
3
2
22
C
U-PHASE

FIG. 3B

| U-PHASE VOLTAGE PHASE $\theta$ (rad) | PHASE(S) CONNECTED TO POSITIVE SIDE OF DC POWER SUPPLY | PHASE(S) CONNECTED TO NEGATIVE SIDE OF DC POWER SUPPLY |
|---|---|---|
| $0 \sim \pi / 3$ | U, W | V |
| $\pi / 3 \sim 2\pi / 3$ | U | V, W |
| $2\pi / 3 \sim \pi$ | U, V | W |
| $\pi \sim 4\pi / 3$ | V | U, W |
| $4\pi / 3 \sim 5\pi / 3$ | V, W | U |
| $5\pi / 3 \sim 2\pi$ | W | U, V |

*FIG. 4*

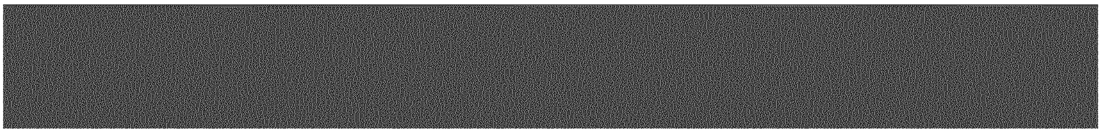

6

*FIG. 5*

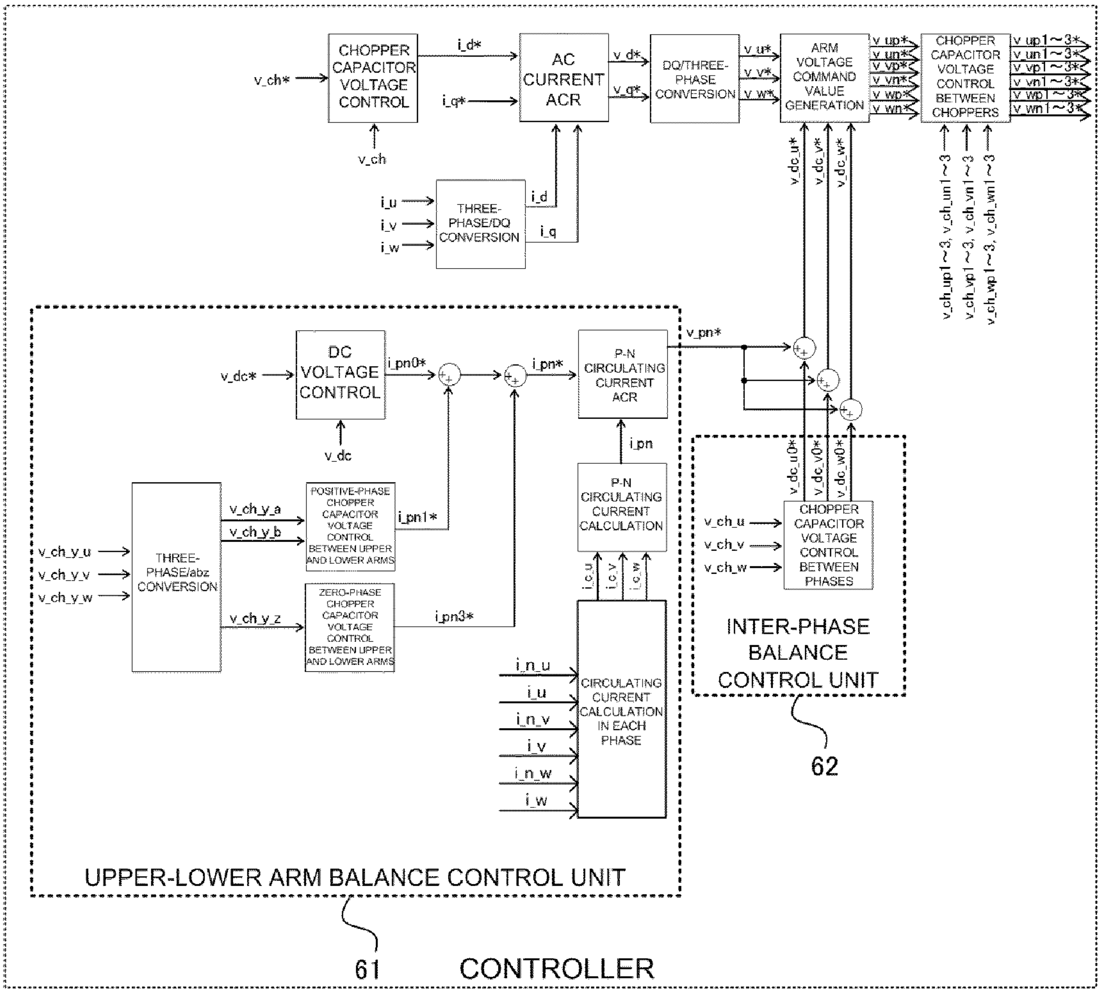


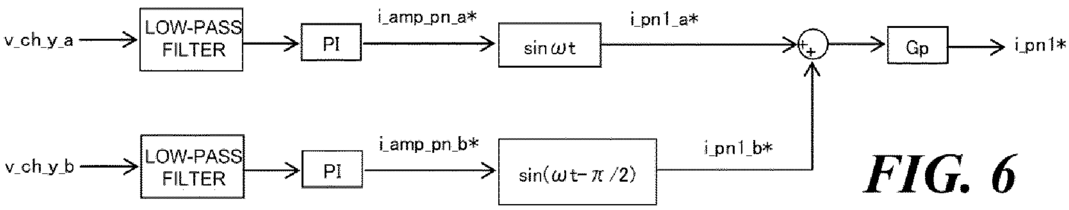


*FIG. 6*

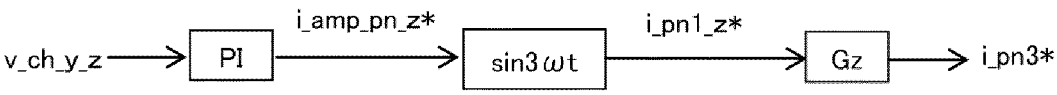


*FIG. 7*

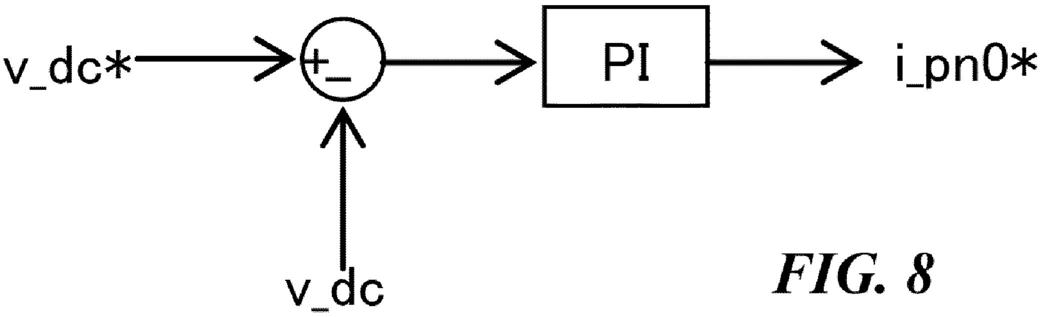


FIG. 8

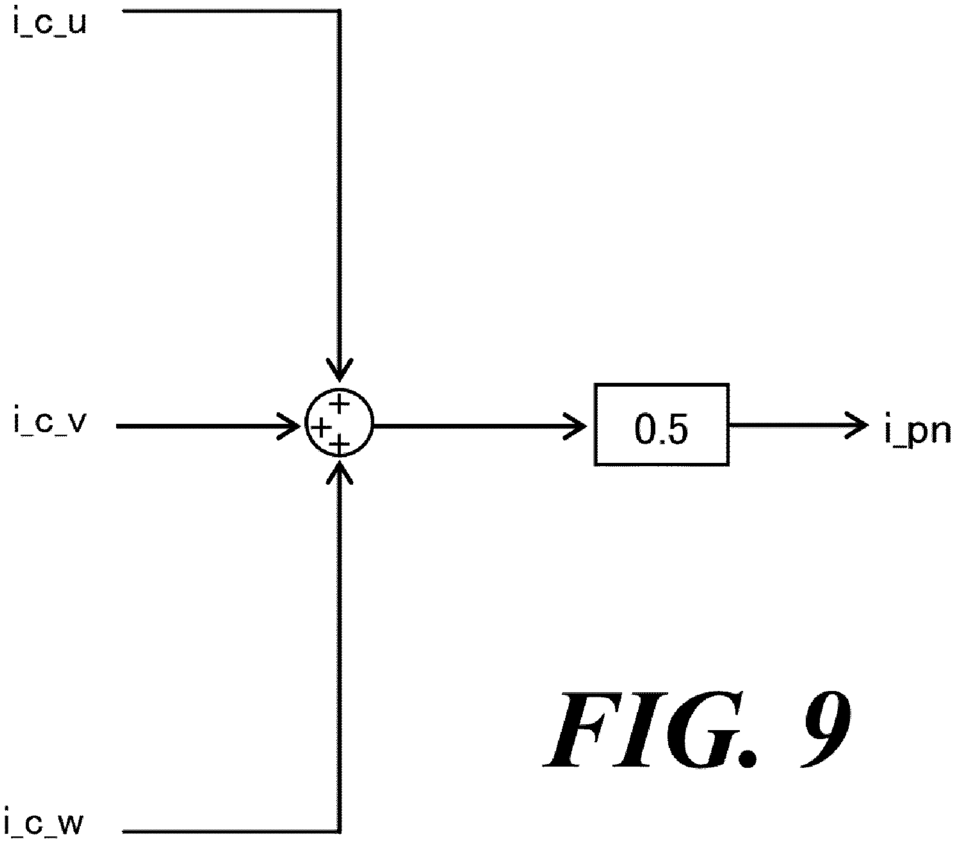


FIG. 9

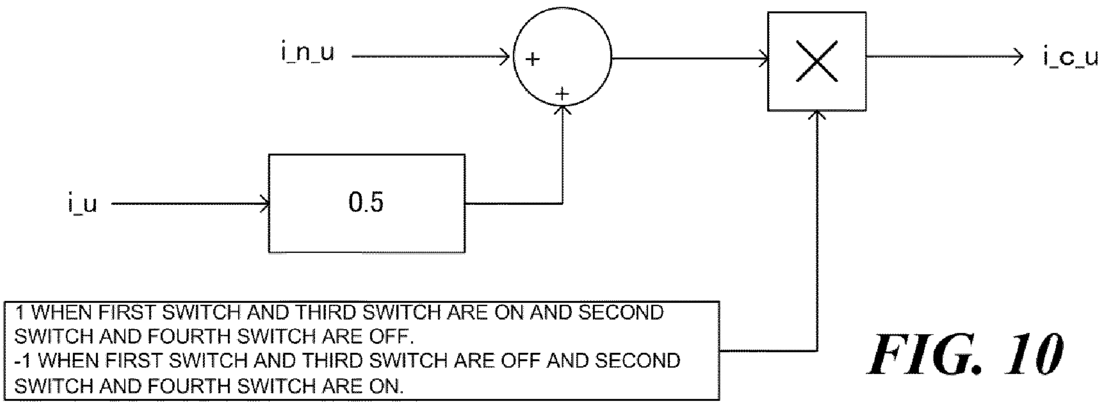


FIG. 10

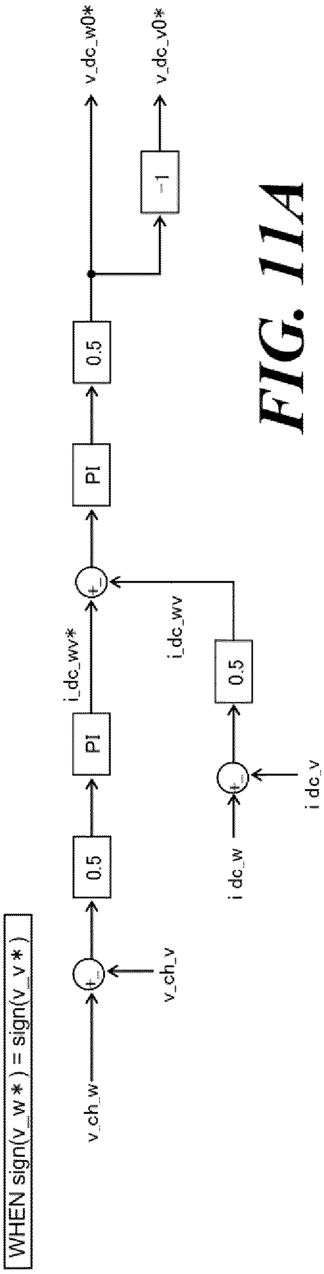


FIG. 11A

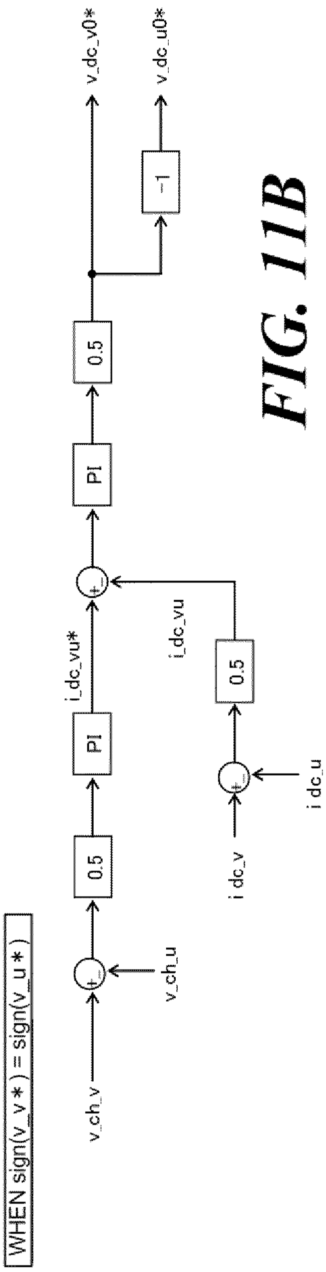


FIG. 11B

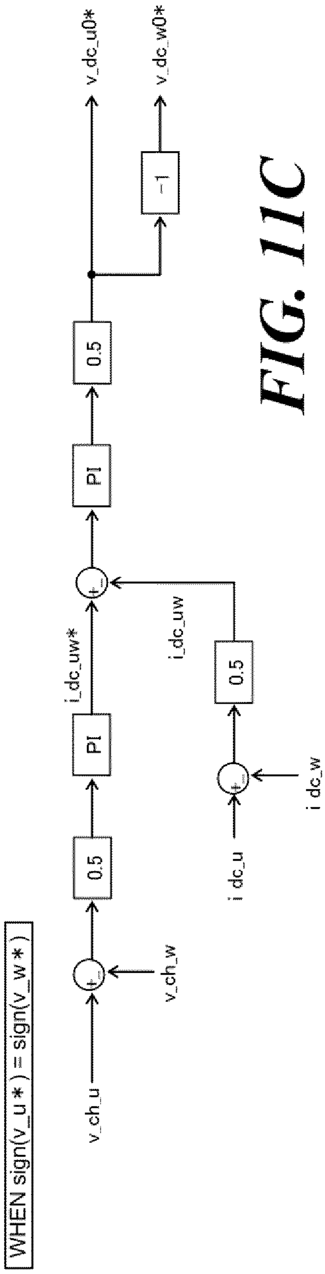


FIG. 11C

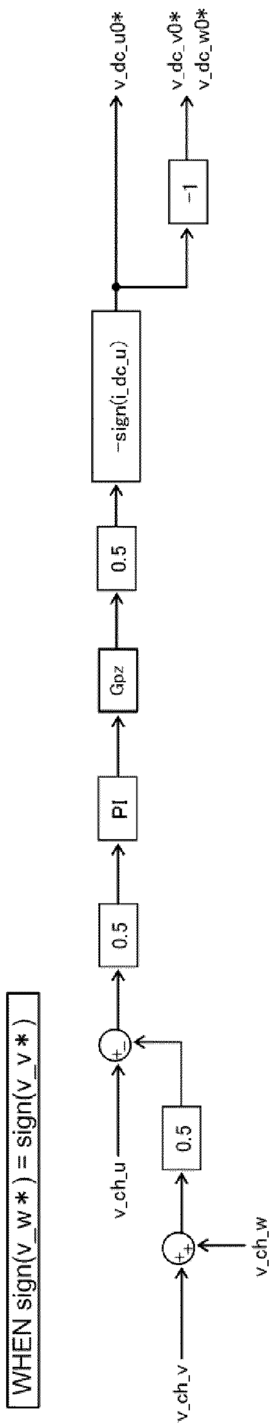


FIG. 12A

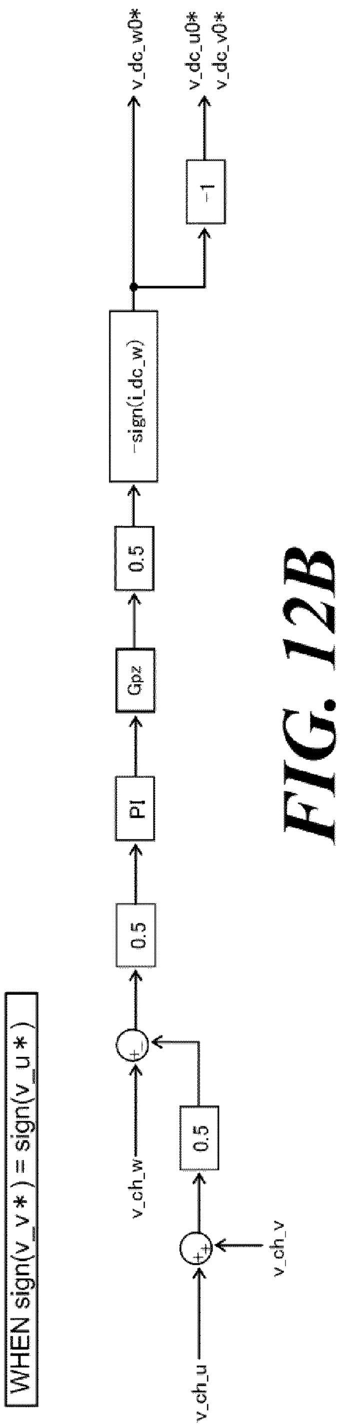


FIG. 12B

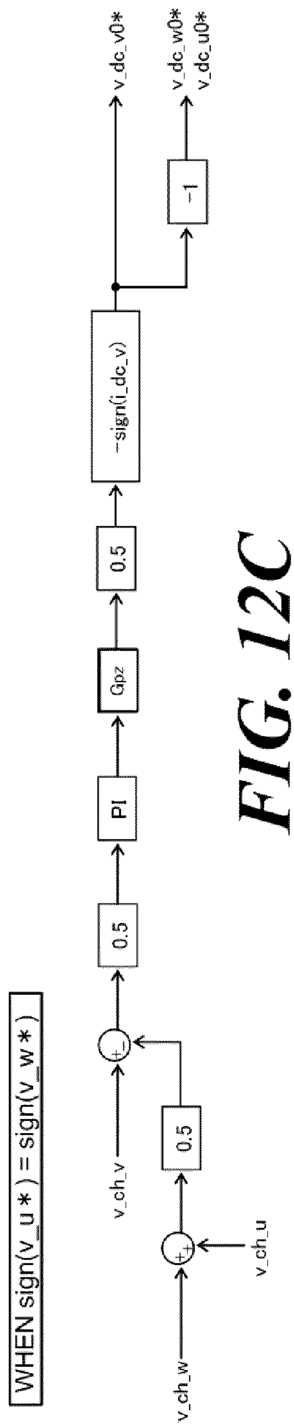


FIG. 12C

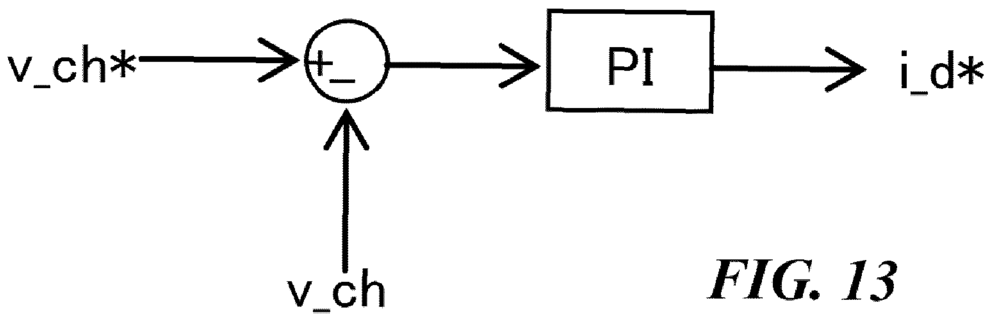


FIG. 13

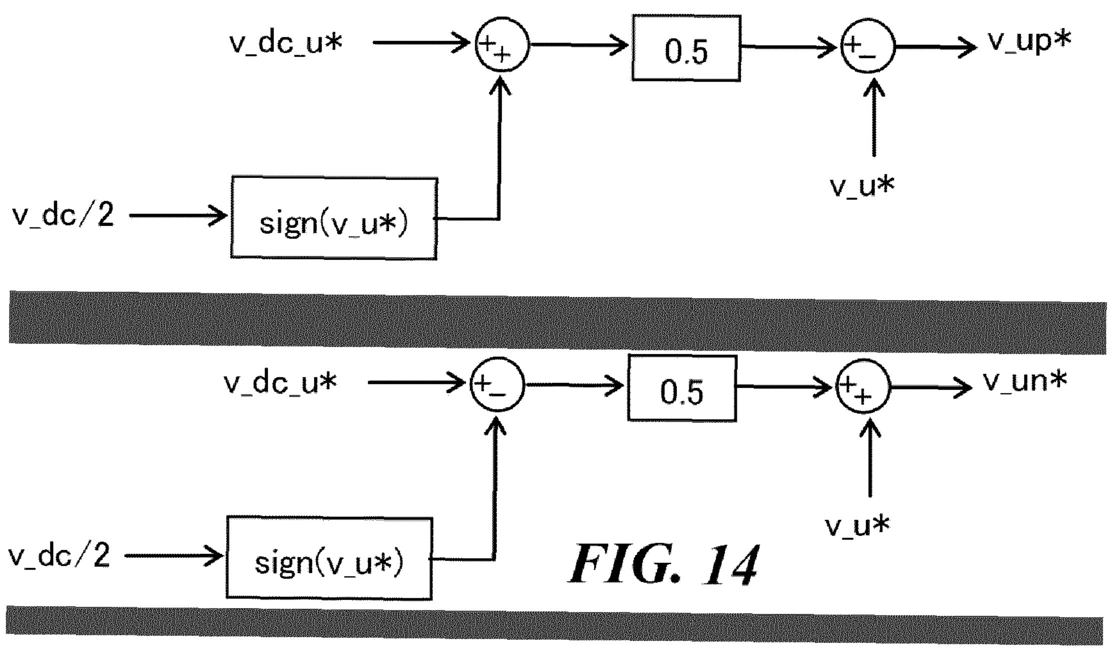


FIG. 14

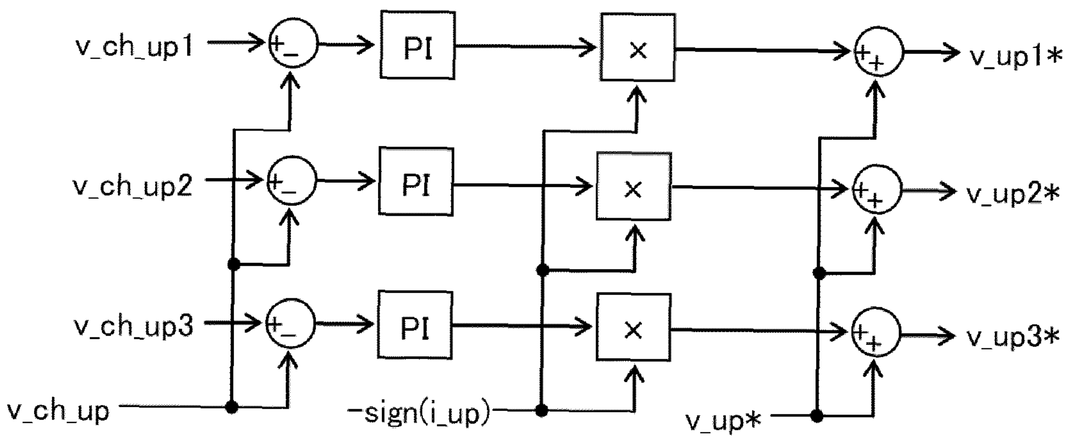


FIG. 15

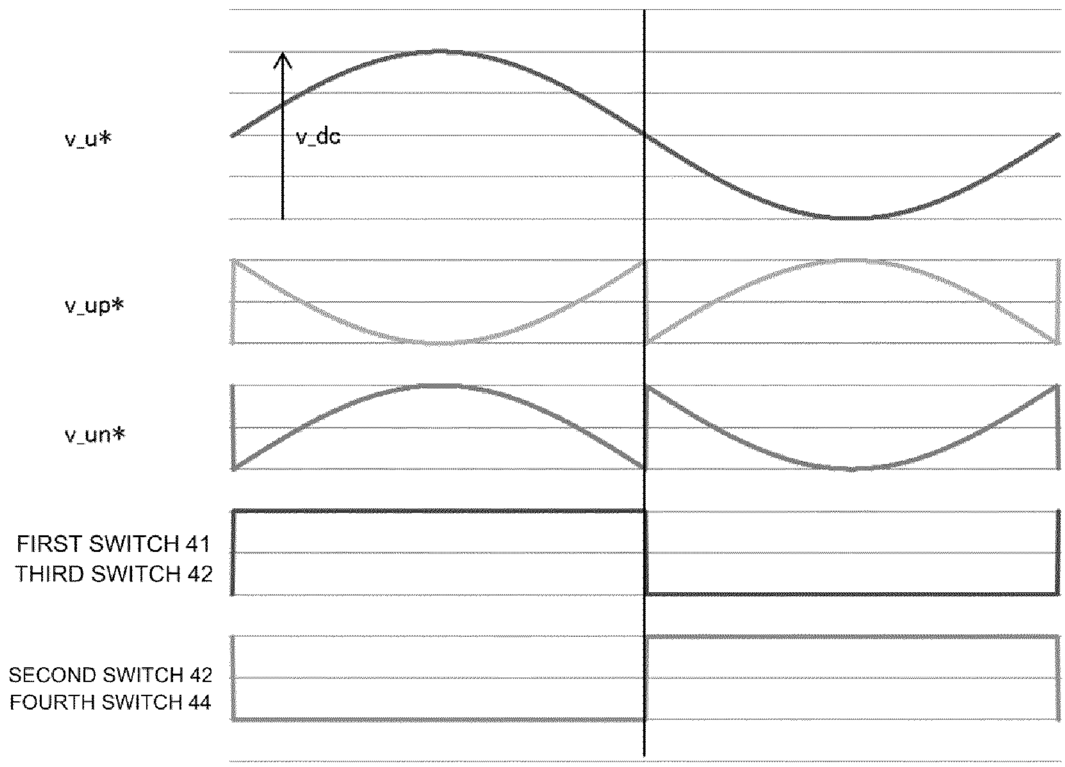
v_u*
v_dc
v_up*
v_un*
FIRST SWITCH 41
THIRD SWITCH 42
SECOND SWITCH 42
FOURTH SWITCH 44

*FIG. 16*

| | FIRST SWITCH | SECOND SWITCH | THIRD SWITCH | FOURTH SWITCH |
|---|---|---|---|---|
| FIRST STATE | ON | OFF | ON | OFF |
| SECOND STATE | ON | OFF | OFF | OFF |
| THIRD STATE | ON | ON | OFF | OFF |
| FOURTH STATE | OFF | ON | OFF | OFF |
| FIFTH STATE | OFF | ON | OFF | ON |
| SIXTH STATE | OFF | OFF | OFF | ON |
| SEVENTH STATE | OFF | OFF | ON | ON |
| EIGHTH STATE | OFF | OFF | ON | OFF |
| FIRST STATE | ON | OFF | ON | OFF |

*FIG. 17*

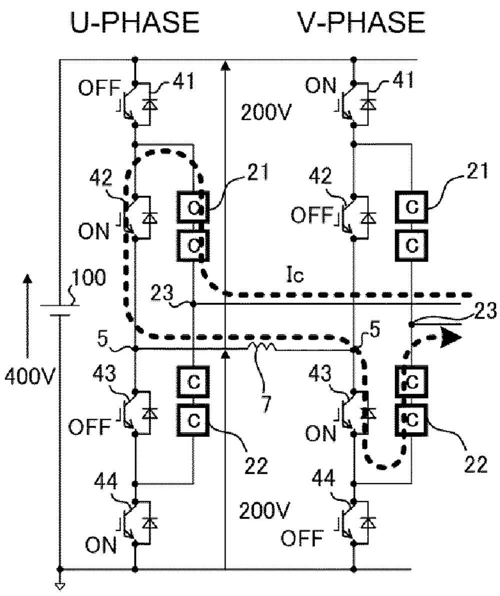


FIG. 18A

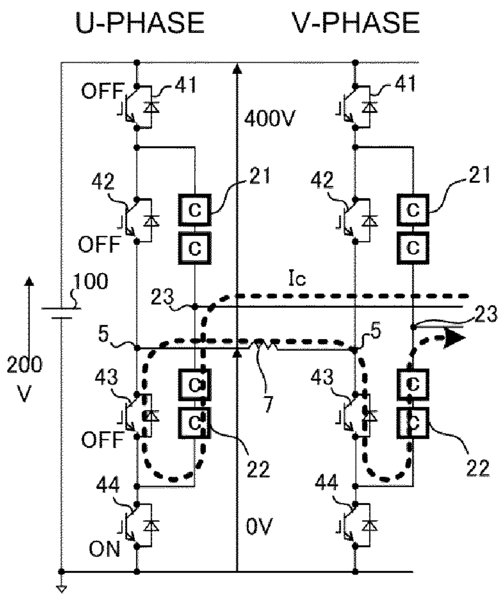


FIG. 18B

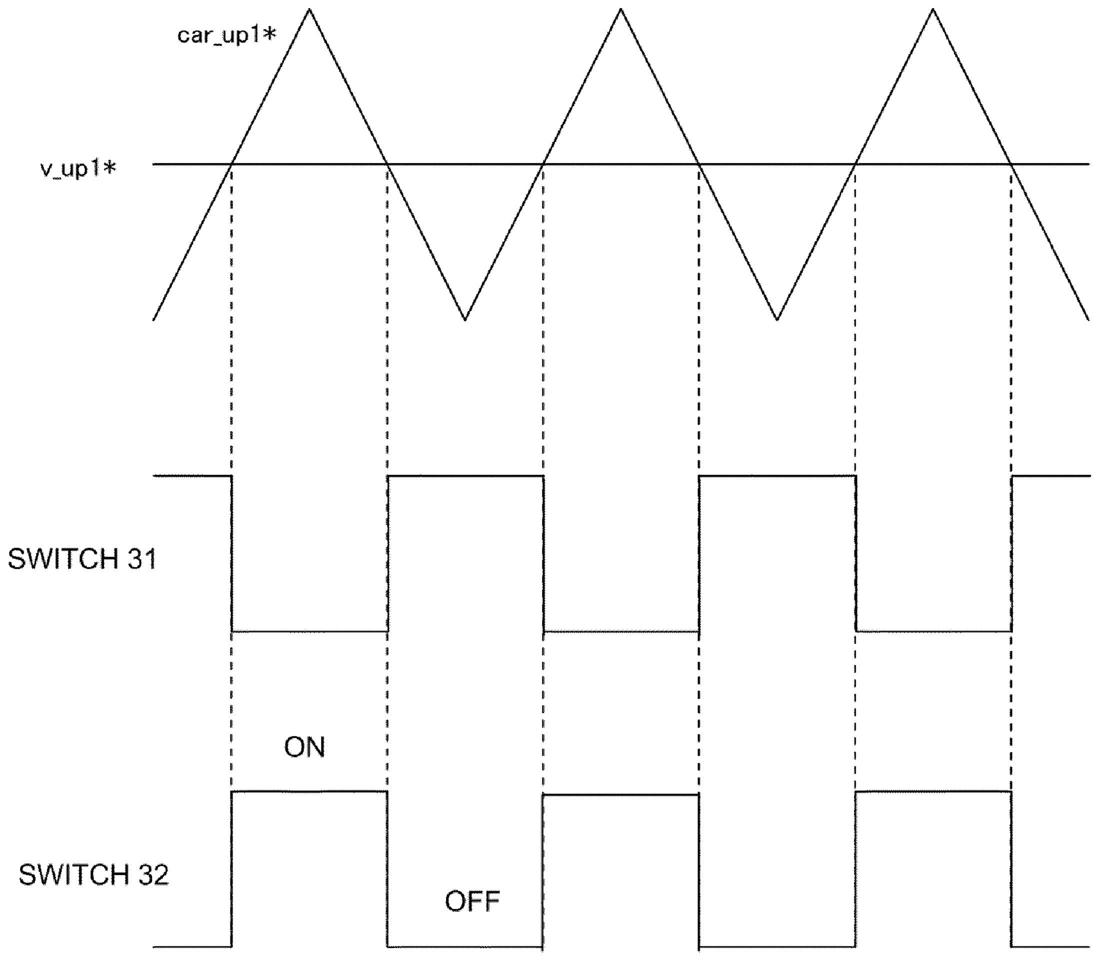


*FIG. 19*

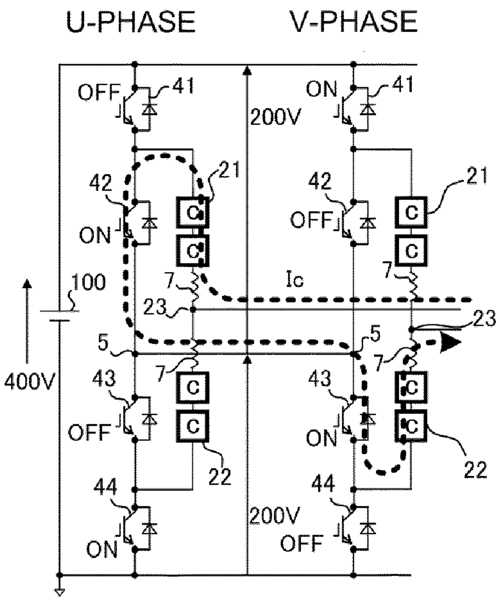


FIG. 20A

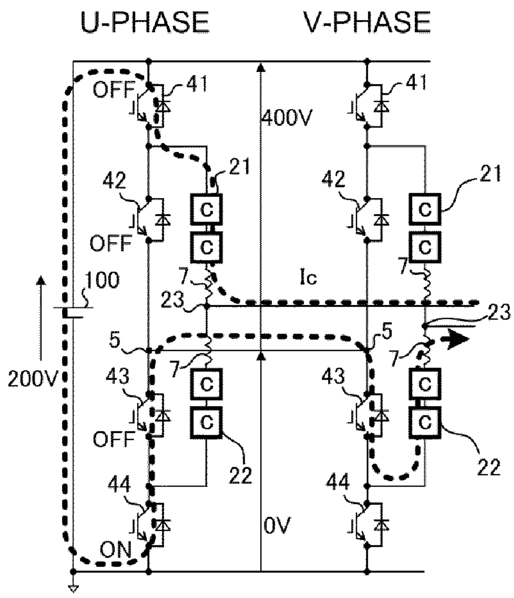


FIG. 20B

## INTERNATIONAL SEARCH REPORT

International application No.
PCT/JP2017/004263

A. CLASSIFICATION OF SUBJECT MATTER
*H02M7/49*(2007.01)i

According to International Patent Classification (IPC) or to both national classification and IPC

B. FIELDS SEARCHED

Minimum documentation searched (classification system followed by classification symbols)
H02M7/49

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2015-146692 A (Toshiba Corp.), 13 August 2015 (13.08.2015), paragraphs [0014] to [0043]; fig. 1 & US 2017/0005590 A1 paragraphs [0032] to [0073]; fig. 1 & WO 2015/115535 A1 & EP 3104515 A1 | 1-2<br>3-6 |
| A | US 2014/0092661 A1 (ZHANG et al.), 03 April 2014 (03.04.2014), fig. 6 & EP 2713495 A2 & CA 2827664 A1 & CN 103715931 A | 1-6 |
| A | US 2014/0092660 A1 (ZHANG et al.), 03 April 2014 (03.04.2014), fig. 5 & EP 2840699 A2 & CA 2857670 A1 | 1-6 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 March 2017 (21.03.17) | 28 March 2017 (28.03.17) |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20140092660 A
- US 20140092661 A